# EUROPEAN PATENT APPLICATION

(11) **EP 4 746 457 A1**
(43) Date of publication of application: **20.05.2026**
(21) Application number: 24853692.2
(22) Date of filing: 09.08.2024
(51) Int. Cl.: H04W 4/24, H04L 12/14, H04M 15/00

(54) **CHARGING METHOD AND RELATED DEVICE**

(30) Priority: 17.08.2023 CN 202311044682
(71) Applicant: Huawei Technologies Co., Ltd., Shenzhen, Guangdong 518129 (CN)
(72) Inventor: CHAI, Xiaoqian, Shenzhen, Guangdong 518129 (CN)
(74) Representative: Isarpatent
(86) International application number: PCT/CN2024/111010
(87) International publication number: WO 2025/036283

(57) **Abstract**

This application relates to the charging field, and specifically, relates to a charging method and a related device. The method includes: A first R-CHF entity receives a first charging request from a charging trigger function CTF entity, where the first charging request is used to request to create, update, or release a first charging resource; the first R-CHF entity sends a second charging request to a primary CHF entity, where the second charging request is used for a second charging resource, and the second charging resource is a charging resource between the R-CHF entity and the primary CHF entity; and the first R-CHF entity receives a second charging response message that is sent by the primary CHF entity in response to the second charging request; and the first R-CHF entity sends a first charging response message to the CTF entity. According to the solutions in this application, normal charging can be ensured when the primary CHF entity cannot provide a charging service.

## Description

This application claims priority to Chinese Patent Application No. 202311044682.1, filed with the China National Intellectual Property Administration on August 17, 2023 and entitled "CHARGING METHOD AND RELATED DEVICE", which is incorporated herein by reference in its entirety.

### TECHNICAL FIELD

This application relates to the charging field, and in particular, to a charging method and a related device.

### BACKGROUND

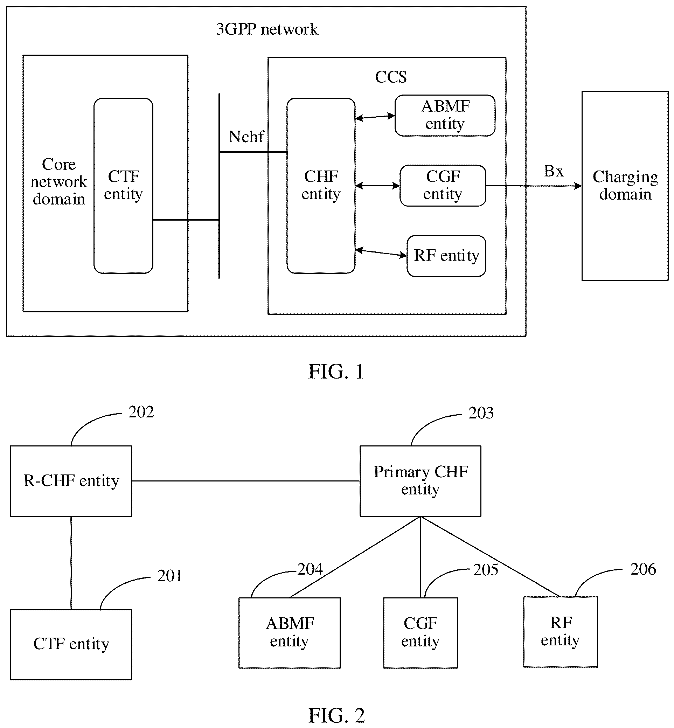

In a 5G architecture, a charging architecture is an architecture that integrates online charging and offline charging. As shown in FIG. 1, a converged charging system (converged charging system, CCS) is a charging system that integrates online charging and offline charging, and is connected to a charging trigger function (charging trigger function, CTF) entity via an Nchf interface. The CCS receives a charging request sent by the CTF entity. The charging request includes quota application information of the CTF, usage information collected by the CTF, and the like. The CCS performs charging processing based on the charging request and related information of a user service, such as a user type, customer information, an account balance, a service trustlist/blocklist, a change trend of the account balance, and a remaining validity period of a package, and sends a charging processing result to the CTF entity, so that the CTF entity adjusts a charging operation performed on the user service.

The CCS includes a charging function (charging function, CHF) entity, an account balance management function (account balance management function, ABMF) entity, a charging gateway function (charging gateway function, CGF) entity, and a rating function (rating function, RF) entity.

The CHF entity includes an online charging function (online charging function, OCF) entity and a charging data function (charging data function, CDF) entity. The CDF is responsible for receiving charging information from the CTF entity or a charging enablement function (charging enablement function, CEF) entity via the Nchf interface, generating a charging data record (charging data record, CDR), and transferring the CDR to the CGF entity. Finally, the CGF entity creates a CDR file, and forwards the CDR file to a related processing device in a charging domain. The OCF, serving as a quota control node for online charging, provides a quota management function, and performs online charging quota processing for various services of a user. The RF entity is responsible for rating charging information provided by the OCF entity. The RF can perform processing for various charging types, such as data amount charging, session/connection time charging, and service event charging. The CGF entity receives the CDR transferred by the CHF entity, completes functions such as sorting, consolidation, filtering, decoding, routing, and distribution of the charging data record, and transfers the charging data record to the charging domain via a Bx interface.

When a location of a user equipment changes or the user uses a new service, a CHF entity corresponding to the user equipment cannot continue providing a charging service. In this case, the user service may be interrupted or an operator loss may be caused.

### SUMMARY

Embodiments of this application provide a charging method and a related device. According to embodiments of this application, normal charging can be ensured when a primary CHF entity cannot provide a charging service, and a charging error caused by a capability difference can be avoided.

According to a first aspect, an embodiment of this application provides a charging method. The method is applied to a first R-CHF entity. The method includes:
The first R-CHF entity receives a first charging request from a charging trigger function CTF entity, where the first charging request is used to request to create, update, or release a first charging resource, and the first charging resource is a charging resource for charging interaction between the CTF entity and the first R-CHF entity; the first R-CHF entity sends a second charging request to a primary CHF entity based on the first charging request, where the second charging request is used for a second charging resource, and the second charging resource is a charging resource for charging interaction between the first R-CHF entity and the primary CHF entity; the first R-CHF entity receives a second charging response message that is sent by the primary CHF entity in response to the second charging request, where the second charging response message includes third capability information, and the third capability information is capability information that is determined by the primary CHF entity based on the second charging request and that is used for interaction between the primary CHF entity and the first R-CHF entity; and the first R-CHF entity generates, based on the second charging response message, a first charging response message in response to the first charging request, and sends the first charging response message to the CTF entity, where the first charging response message includes fourth capability information, and the fourth capability information is capability information that is determined by the first R-CHF based on the third capability information and that is used for interaction between the first R-CHF entity and the CTF entity.

The R-CHF entity is introduced, so that normal charging can be ensured when the primary CHF entity cannot provide a charging service. In addition, capability negotiation is performed between the CTF entity and the first R-CHF entity and between the first R-CHF entity and the primary CHF entity, to help resolve a problem that a charging error occurs due to a capability difference.

With reference to the first aspect, in a possible implementation, the first charging request further includes first capability information, and the first capability information is capability information that is provided by the CTF entity and that can be used for interaction between the first R-CHF entity and the CTF entity; the second charging request includes second capability information, the second capability information represents a capability used for interaction between the primary CHF entity and the first R-CHF entity, and the second capability information is determined by the first R-CHF entity based on the first capability information; and the third capability information is determined by the primary CHF entity based on the second capability information.

When determining the capability information, the primary CHF entity considers the capability information of the CTF entity and the capability information of the first R-CHF entity, to further help resolve a problem that a charging error occurs due to a capability difference.

With reference to the first aspect, in a possible implementation, the first capability information includes at least one of a first payload (payload) size that is of a charging message for the first charging resource and that is supported by the CTF entity, first idle duration during collection of charging information performed by the CTF entity for the first charging resource, or a first charging feature;
the fourth capability information includes at least one of a fourth payload size of a charging message for the first charging resource, fourth idle duration during collection of charging information performed by the CTF entity for the first charging resource, a fourth charging feature, or a first charging resource trigger condition setting;
the second capability information includes at least one of a second payload size that is of a charging message for the second charging resource and that is supported by the first R-CHF entity, second idle duration during collection of charging information performed by the first R-CHF entity for the second charging resource, or a second charging feature; and
the third capability information includes at least one of a third payload size for a charging message for the second charging resource, third idle duration during collection of charging information performed by the first R-CHF entity for the second charging resource, a third charging feature, or a second charging resource trigger condition setting.

The charging message for the first charging resource is a message exchanged between the first R-CHF entity and the CTF entity, for example, the first charging request or the first charging response message. The charging message for the second charging resource is information exchanged between the first R-CHF entity and the primary CHF entity, for example, the second charging request or the second charging response message.

With reference to the first aspect, in a possible implementation, that the second capability information is determined by the first R-CHF entity based on the first capability information includes:
When the first capability information includes the first payload size, the second capability information also includes the second payload size, and the second payload size is a smaller one of the first payload size and a payload size that is of a charging message for the first charging resource and that is supported by the first R-CHF entity; when the first capability information includes the first idle duration, the second capability information also includes the second idle duration, and the second idle duration is a smaller one of the first idle duration and idle duration during collection of charging information performed by the first R-CHF entity for the second charging resource; and when the first capability information includes the first charging feature, the second capability information also includes the second charging feature, and the second charging feature is an intersection of the first charging feature and a charging feature supported by the first R-CHF entity.

Capability negotiation between the CTF entity and the first R-CHF entity can be implemented in the foregoing manner.

With reference to the first aspect, in a possible implementation, when the third capability information includes the third payload size, the fourth capability information also includes the fourth payload size; and if the second capability information includes the second payload size, the fourth payload size is the third payload size; or if the second capability information does not include the second payload size, the fourth payload size is a smaller one of the third payload size and a payload size that is of a charging message for the first charging resource and that is supported by the first R-CHF entity;
when the third capability information includes the third idle duration, the fourth capability information also includes the fourth idle duration; and if the second capability information includes the second idle duration, the fourth idle duration is the third idle duration; or if the second capability information does not include the second idle duration, the fourth idle duration is a smaller one of the third idle duration and idle duration during collection of charging information performed by the first R-CHF entity for the second charging resource; and
when the third capability information includes the third charging feature, the fourth capability information also includes the fourth charging feature; and if the second capability information includes the second charging feature, the fourth charging feature is the third charging feature; or if the second capability information does not include the second charging feature, the fourth charging feature is an intersection of the third charging feature and a charging feature supported by the first R-CHF entity.

Capability negotiation between the CTF entity and the first R-CHF entity and between the first R-CHF entity and the primary CHF entity can be implemented in the foregoing manner.

With reference to the first aspect, in a possible implementation, when the third capability information includes the second charging resource trigger condition setting, the fourth capability information also includes the first charging resource trigger condition setting, status information in the first charging resource trigger condition setting is a union of status information in the second charging resource trigger condition setting and status information of a trigger condition determined by the first R-CHF entity; and
a threshold of a trigger condition in the first charging resource trigger condition setting is a smaller one of a threshold of a trigger condition in the second charging resource trigger condition setting and a threshold of the trigger condition determined by the first R-CHF entity.

Capability negotiation between the CTF entity and the first R-CHF entity and between the first R-CHF entity and the primary CHF entity can be implemented in the foregoing manner.

With reference to the first aspect, in a possible implementation, the first charging request is used to request to create the first charging resource, and the method in this embodiment further includes:
When the first charging request is used to request to execute session-based converged charging, the first R-CHF entity generates the first charging resource corresponding to the first charging request; and the first R-CHF entity opens a first R-CHF charging data record in the first charging resource, and writes charging information in the first charging request into the first R-CHF charging data record; and when the first charging request is used to request to execute one-off event charging, the first R-CHF entity generates the first charging resource corresponding to the first charging request, and generates the first R-CHF charging data record based on the first charging resource and the charging information in the first charging request, where the first R-CHF charging data record includes the charging information in the first charging request.

With reference to the first aspect, in a possible implementation, the first charging request carries an identifier of the second charging resource generated by the primary CHF entity, and the method in this embodiment further includes:
The first R-CHF entity generates the second charging request based on the identifier of the second charging resource, where the second charging request is used to request to update or release the second charging resource.

The second charging request includes the identifier of the second charging resource, and the second charging resource is a charging resource generated by the primary CHF entity.

With reference to the first aspect, in a possible implementation, the second charging request further carries a receiving address of a notification from the first R-CHF, and the notification receiving address is used to update a notification address corresponding to the second charging resource on the primary CHF entity.

The notification address is used by the primary CHF entity to subsequently send a notification message to the first R-CHF entity.

With reference to the first aspect, in a possible implementation, the second charging request is used to request to update or release the second charging resource update, the second charging request carries adjustment indication information, and the indication information indicates that the first R-CHF entity has adjusted the trigger condition setting delivered by the primary CHF entity.

With reference to the first aspect, in a possible implementation, the first charging request is used to update or release the first charging resource, and the method in this embodiment further includes:
The first R-CHF entity determines a second R-CHF entity, where the second R-CHF entity is a CHF entity that provides a relay capability for the CTF entity and the primary CHF entity before the first R-CHF entity serves as a relay CHF entity; and the first R-CHF entity obtains related information of the first charging resource from the second R-CHF entity, where the first charging information is a charging resource generated by the second R-CHF entity.

With reference to the first aspect, in a possible implementation, the first charging request carries information for switching from the second R-CHF entity to the first R-CHF entity. That the first R-CHF entity obtains the related information of the first charging resource from the second R-CHF entity includes:

The first R-CHF entity obtains first charging resource information from the second R-CHF entity based on the switching information; and
the method in this embodiment further includes: The first R-CHF entity generates the second charging request based on the obtained information of the first charging resource.

The first charging resource generated by the second R-CHF entity is obtained, to implement switching from the second R-CHF entity to the first R-CHF entity.

With reference to the first aspect, in a possible implementation, the method in this embodiment further includes:

The first R-CHF entity receives an R-CHF removal request sent by the CTF entity, where the R-CHF removal request includes a removal indication, and the removal indication is used for the first R-CHF to return related information of the second charging resource generated by the primary CHF entity; and sends a removal response message to the CTF entity, where the removal response message includes the related information of the second charging resource generated by the primary CHF entity.

With reference to the first aspect, in a possible implementation, the method in this embodiment further includes:

The first R-CHF entity releases the first charging resource based on the R-CHF removal request, where the removal response message further includes a release result of the first charging resource.

When the first R-CHF entity provides a relay function for the CTF entity and the primary CHF entity, if the primary CHF entity can directly provide charging for the CTF entity, the first R-CHF entity is removed, to simplify a charging system and reduce power consumption of the first R-CHF entity.

According to a second aspect, an embodiment of this application provides another charging method. The method is applied to a CTF entity. The method includes:

The CTF entity sends a charging request to a first R-CHF entity, where when the charging request is an R-CHF removal request on a premise that a charging resource has been established between the first R-CHF entity and a primary CHF entity, the R-CHF removal request includes a removal indication, the removal indication indicates the R-CHF to return related information of a second charging resource generated by the primary CHF entity, and the primary CHF entity provides online quota management and charging data record generation; and
the method in this embodiment further includes:

The CTF entity receives a removal response message sent by the first R-CHF entity, where the removal response message includes the related information of the second charging resource generated by the primary CHF entity, and related information of a second charging resource includes an identifier of the second charging resource; and the CTF entity sends a third charging request to the primary CHF based on the identifier of the second charging resource, where the third charging request is an operation request of the second charging resource.

The third charging request is a charging resource update request or a charging resource release request.

With reference to the second aspect, in a possible implementation, before or after the third charging request is sent, the method in this embodiment further includes:
The CTF entity sends a charging resource release request to the first R-CHF entity, where the charging resource release request is used to request to release related information of the charging resource created by the first R-CHF entity; and the CTF entity receives a charging resource release response message sent by the first R-CHF entity, where the charging resource release response message indicates that the first R-CHF entity has released the related information of the charging resource created by the first R-CHF entity.

When the first R-CHF entity provides a relay function for the CTF entity and the primary CHF entity, if the primary CHF entity can directly provide charging for the CTF entity, the first R-CHF entity is removed, to simplify a charging system and reduce power consumption of the first R-CHF entity.

With reference to the second aspect, in a possible implementation, when the charging request is an R-CHF insertion request on a premise that a charging resource has been established between the CTF entity and the primary CHF entity, the R-CHF insertion request includes the related information of the second charging resource generated by the primary CHF entity; and
the method in this embodiment further includes: The CTF entity receives a charging response message sent by the first R-CHF entity, where the charging response message includes a result of sending the third charging request by the first R-CHF to the primary CHF based on the related information of the second charging resource.

According to a third aspect, an embodiment of this application provides a first R-CHF entity. The first R-CHF entity includes a transceiver unit and a generation unit.

The transceiver unit is configured to receive a first charging request from a charging trigger function CTF entity, where the first charging request is used to request to create, update, or release a first charging resource;
the transceiver unit, further configured to send a second charging request to a primary CHF entity, where the second charging request is used to request to create, update, or release a second charging resource; and receive a second charging response message that is sent by the primary CHF entity in response to the second charging request, where the second charging response message includes third capability information, and the third capability information is capability information that is determined by the primary CHF entity based on the second charging request and that is used for interaction between the primary CHF entity and the first R-CHF entity;
the generation unit, further configured to generate, based on the second charging response message, a first charging response message in response to the first charging request; and
the transceiver unit, further configured to send the first charging response message to the CTF entity, where the first charging response message includes fourth capability information, and the fourth capability information is capability information that is determined by the first R-CHF based on the third capability information and that is used for interaction between the first R-CHF entity and the CTF entity.

With reference to the third aspect, in a possible implementation, the first charging request further includes first capability information, and the first capability information is capability information that is provided by the CTF entity and that can be used for interaction between the first R-CHF entity and the CTF entity; the second charging request includes second capability information, the second capability information represents a capability used for interaction between the primary CHF entity and the first R-CHF entity, and the second capability information is determined by the first R-CHF entity based on the first capability information; and the third capability information is determined by the primary CHF entity based on the second capability information.

With reference to the third aspect, in a possible implementation, the first capability information includes at least one of a payload size that is of a charging message for the first charging resource and that is supported by the CTF entity, first idle duration during collection of charging information performed by the CTF entity for the first charging resource, or a charging feature;
the fourth capability information includes at least one of a payload size of a charging message for the first charging resource, fourth idle duration during collection of charging information performed by the CTF entity for the first charging resource, a charging feature, or a first charging resource trigger condition setting;
the second capability information includes at least one of a payload size that is of a charging message for the second charging resource and that is supported by the first R-CHF entity, second idle duration during collection of charging information performed by the first R-CHF entity for the second charging resource, or a charging feature; and
the third capability information includes at least one of a payload size of a charging message for the second charging resource, third idle duration during collection of charging information performed by the first R-CHF entity for the second charging resource, a charging feature, or a second charging resource trigger condition setting.

With reference to the third aspect, in a possible implementation, that the second capability information is determined by the first R-CHF entity based on the first capability information includes:
When the first capability information includes the first payload size, the second capability information also includes the second payload size, and the second payload size is a smaller one of the first payload size and a payload size that is of a charging message for the first charging resource and that is supported by the first R-CHF entity; when the first capability information includes the first idle duration, the second capability information also includes the second idle duration, and the second idle duration is a smaller one of the first idle duration and idle duration during collection of charging information performed by the first R-CHF entity for the second charging resource; and when the first capability information includes the first charging feature, the second capability information also includes the second charging feature, and the second charging feature is an intersection of the first charging feature and a charging feature supported by the first R-CHF entity.

Capability negotiation between the CTF entity and the first R-CHF entity can be implemented in the foregoing manner.

With reference to the third aspect, in a possible implementation,
when the third capability information includes the first payload size, the fourth capability information also includes the fourth payload size; and if the second capability information includes the second payload size, the fourth payload size is the third payload size; or if the second capability information does not include the second payload size, the fourth payload size is a smaller one of the third payload size and a payload size that is of a charging message for the first charging resource and that is supported by the first R-CHF entity;
when the third capability information includes the third idle duration, the fourth capability information also includes the fourth idle duration; and if the second capability information includes the third idle duration, the fourth idle duration is the third idle duration; or if the second capability information does not include the second idle duration, the fourth idle duration is a smaller one of the third idle duration and idle duration during collection of charging information performed by the first R-CHF entity for the second charging resource; and
when the third capability information includes the third charging feature, the fourth capability information also includes the fourth charging feature; and if the second capability information includes the second charging feature, the fourth charging feature is the third charging feature; or if the second capability information does not include the second charging feature, the fourth charging feature is an intersection of the third charging feature and a charging feature supported by the first R-CHF entity.

With reference to the third aspect, in a possible implementation, when the third capability information includes the second charging resource trigger condition setting, the fourth capability information also includes the first charging resource trigger condition setting, status information in the first charging resource trigger condition setting is a union of status information in the second charging resource trigger condition setting and status information of a trigger condition determined by the first R-CHF entity; and
a threshold of a trigger condition in the first charging resource trigger condition setting is a smaller one of a threshold of a trigger condition in the second charging resource trigger condition setting and a threshold of the trigger condition determined by the first R-CHF entity.

With reference to the third aspect, in a possible implementation, the first R-CHF entity further includes:
an execution unit, configured to perform charging processing based on a first charging request.

With reference to the third aspect, in a possible implementation, the first charging request is used to request to create the first charging resource, the first R-CHF entity further includes the execution unit, and the execution unit is configured to:
when the first charging request is used to request to perform session-based converged charging, generate the first charging resource corresponding to the first charging request; and open a first R-CHF charging data record in the first charging resource, and write charging information in the first charging request into the first R-CHF charging data record; and when the first charging request is used to request to perform one-time event charging, generate the first charging resource corresponding to the first charging request, and generate the first R-CHF charging data record based on the first charging resource and the charging information in the first charging request, where the first R-CHF charging data record includes the charging information in the first charging request.

With reference to the third aspect, in a possible implementation, the first charging request carries an identifier of the second charging resource generated by the primary CHF entity, the first R-CHF entity further includes the execution unit, and the execution unit is configured to:
generate the second charging request based on the identifier of the second charging resource, where the second charging request is used to request to update or release the second charging resource.

With reference to the third aspect, in a possible implementation, the second charging request further carries a notification receiving address for the first R-CHF, and the notification receiving address is used to update a notification address corresponding to the second charging resource on the primary CHF entity.

The notification address is used by the primary CHF entity to subsequently send a notification message to the first R-CHF entity.

With reference to the third aspect, in a possible implementation, the second charging request is used to request to update or release the second charging resource, the second charging request carries adjustment indication information, and the indication information indicates that the first R-CHF entity has adjusted the trigger condition setting delivered by the primary CHF entity.

With reference to the third aspect, in a possible implementation, the first charging request is used to update or release the first charging resource, the first R-CHF entity further includes the execution unit, and the execution unit is configured to:
determine a second R-CHF entity, where the second R-CHF entity is a CHF entity that provides a relay capability for the CTF entity and the primary CHF entity before the first R-CHF entity serves as a relay CHF entity; and obtain related information of the first charging resource from the second R-CHF entity, where the first charging information is a charging resource generated by the second R-CHF entity.

With reference to the third aspect, in a possible implementation, the first charging request carries information for switching from the second R-CHF entity to the first R-CHF entity, and in an aspect of obtaining the related information of the first charging resource from the second R-CHF entity, the execution unit is specifically configured to:
obtain the information of the first charging resource from the second R-CHF entity based on the switching information; and
a generation unit is further configured to generate the second charging request based on the obtained information of the first charging resource.

With reference to the third aspect, in a possible implementation, the transceiver unit is further configured to:
receive an R-CHF removal request sent by the CTF entity, where the R-CHF removal request includes a removal indication, and the removal indication is used for the first R-CHF to return related information of the second charging resource generated by the primary CHF entity; and send a removal response message to the CTF entity, where the removal response message includes the related information of the second charging resource generated by the primary CHF entity.

With reference to the third aspect, in a possible implementation, the first R-CHF entity further includes:
a release unit, configured to release the first charging resource based on the R-CHF removal request, where the removal response message further includes a release result of the first charging resource.

According to a fourth aspect, an embodiment of this application further provides a CTF entity, including a sending unit and a receiving unit.

The sending unit is configured to send a charging request to a first R-CHF entity, where when the charging request is an R-CHF removal request on a premise that a charging resource has been established between the first R-CHF entity and a primary CHF entity, the R-CHF removal request includes a removal indication, the removal indication indicates the R-CHF to return related information of a second charging resource generated by the primary CHF entity, and the primary CHF entity provides online quota management and charging data record generation;
the receiving unit is configured to receive a removal response message sent by the first R-CHF entity, where the removal response message includes the related information of the second charging resource generated by the primary CHF entity, and related information of a first charging resource includes an identifier of the second charging resource; and
the sending unit is further configured to send a third charging request to the primary CHF based on the identifier of the second charging resource, where the third charging request is an operation request of the second charging resource.

With reference to the fourth aspect, in a possible implementation, before or after the sending unit sends the third charging request,
the sending unit is further configured to send a charging resource release request to the first R-CHF entity, where the charging resource release request is used to request to release related information of the charging resource created by the first R-CHF entity; and
the receiving unit is further configured to receive a charging resource release response message sent by the first R-CHF entity, where the charging resource release response message indicates that the first R-CHF entity has released the related information of the charging resource created by the first R-CHF entity.

With reference to the fourth aspect, in a possible implementation, when the charging request is an R-CHF insertion request on a premise that a charging resource has been established between the CTF entity and the primary CHF entity, the R-CHF insertion request includes the related information of the second charging resource generated by the primary CHF entity; and
the receiving unit is configured to receive a charging response message sent by the first R-CHF entity, where the charging response message includes a result of sending the third charging request by the first R-CHF to the primary CHF based on the related information of the second charging resource.

According to a fifth aspect, an embodiment of this application provides a first R-CHF entity, including a processor and a memory. The memory is configured to store program code. The processor is configured to invoke the program code stored in the memory, to perform the method provided in any one of the first aspect or the possible implementations of the first aspect.

According to a sixth aspect, an embodiment of this application provides a CTF entity, including a processor and a memory. The memory is configured to store program code. The processor is configured to invoke the program code stored in the memory, to perform the method provided in any one of the second aspect or the possible implementations of the second aspect.

According to a seventh aspect, an embodiment of this application provides a computer storage medium, including computer instructions. When the computer instructions are run on an electronic device, the electronic device is enabled to perform the method according to the possible implementations of the first aspect, or the method according to the possible implementations of the second aspect.

According to an eighth aspect, an embodiment of this application provides a computer program product. When the computer program product is run on a computer, the computer is enabled to perform the method according to the possible implementations of the first aspect, or the method according to the possible implementations of the second aspect.

According to a ninth aspect, an embodiment of this application further provides a charging method, where the charging method is applied to a charging system, the charging system includes a first R-CHF entity, a CTF entity, and a primary CHF entity, and the charging method includes:
The CTF entity sends a first charging request to the first R-CHF entity, where the first charging request is used to request to create, update, or release a first charging resource;
the first R-CHF entity sends a second charging request to the primary CHF entity, where the second charging request is used to request to create, update, or release a second charging resource, and the primary CHF entity provides online quota management and charging data record generation;
the primary CHF entity performs charging processing based on the second charging request, and generates a second charging response message in response to the second charging request; and sends the second charging response message to the first R-CHF entity, where the second charging response message includes third capability information, and the third capability information is capability information that is determined by the primary CHF based on the second charging request and that is used for interaction between the primary CHF entity and the first R-CHF entity;
the first R-CHF entity generates, based on the second charging response message, a first charging response message in response to the first charging request, and sends the first charging response message to the CTF entity, where the first charging response message includes fourth capability information, and the fourth capability information is capability information that is determined by the first R-CHF based on the third capability information and that is used for interaction between the first R-CHF entity and the CTF entity; and
the CTF entity performs charging processing based on the first charging response message.

According to a tenth aspect, an embodiment of this application further provides a charging system. The charging system includes a first R-CHF entity, a CTF entity, and a primary CHF entity.

The CTF entity is configured to send a first charging request to the first R-CHF entity, where the first charging request is used to request to create, update, or release a first charging resource;
the first R-CHF entity is configured to send a second charging request to the primary CHF entity, where the second charging request is used to request to create, update, or release a second charging resource, and the primary CHF entity provides online quota management and charging data record generation;
the primary CHF entity is configured to perform charging processing based on the second charging request, and generate a second charging response message in response to the second charging request; and send the second charging response message to the first R-CHF entity, where the second charging response message includes third capability information, and the third capability information is capability information that is determined by the primary CHF based on the second charging request and that is used for interaction between the primary CHF entity and the first R-CHF entity;
the first R-CHF entity is configured to generate, based on the second charging response message, a first charging response message in response to the first charging request, and send the first charging response message to the CTF entity, where the first charging response message includes fourth capability information, and the fourth capability information is capability information that is determined by the first R-CHF based on the third capability information and that is used for interaction between the first R-CHF entity and the CTF entity; and
the CTF entity is configured to perform charging processing based on the first charging response message.

It can be understood that, for specific descriptions of the CTF entity, the first R-CHF entity, and the primary CHF entity in the ninth aspect or the tenth aspect, refer to the method according to any one of the possible implementations of the first aspect and the method according to any one of the possible implementations of the second aspect. Details are not described herein again. The first R-CHF entity according to the third aspect or the fifth aspect is configured to perform the method according to any one of the possible implementations of the first aspect, the CTF entity according to the fourth aspect or the sixth aspect is configured to perform the method according to any one of the possible implementations of the second aspect, and both the computer storage medium according to the seventh aspect and the computer program product according to the eighth aspect are configured to implement the method according to any one of the possible implementations of the first aspect or the method according to any one of the possible implementations of the second aspect. Therefore, for beneficial effects that can be achieved thereof, refer to the beneficial effects in the corresponding methods. Details are not described herein again.

### BRIEF DESCRIPTION OF DRAWINGS

FIG. 1 is a diagram of an architecture of a charging system;
FIG. 2 is a diagram of an architecture of a system according to an embodiment of this application;
FIG. 3 is a schematic flowchart of a charging method according to an embodiment of this application;
FIG. 4 is a schematic flowchart of another charging method according to an embodiment of this application;
FIG. 5 is a schematic interaction flowchart of a charging method according to an embodiment of this application;
FIG. 6 is a schematic interaction flowchart of another charging method according to an embodiment of this application;
FIG. 7 is a schematic interaction flowchart of another charging method according to an embodiment of this application;
FIG. 8 is a schematic interaction flowchart of another charging method according to an embodiment of this application;
FIG. 9 is a diagram of a structure of a first R-CHF entity according to an embodiment of this application;
FIG. 10 is a diagram of a structure of a CTF entity according to an embodiment of this application;
FIG. 11 is a diagram of a structure of another first R-CHF entity according to an embodiment of this application; and
FIG. 12 is a diagram of a structure of another CTF entity according to an embodiment of this application.

### DESCRIPTION OF EMBODIMENTS

In the specification, claims, and accompanying drawings of this application, the terms "first", "second", "third", "fourth", and the like are intended to distinguish between different objects but do not indicate a particular order.

"A plurality of" refers to two or more than two. The term "and/or" describes an association relationship for describing associated objects and represents that three relationships exist. For example, A and/or B represent/represents the following three cases: Only A exists, both A and B exist, and only B exists. The character "/" generally indicates an "or" relationship between the associated objects.

The following describes embodiments of this application with reference to the accompanying drawings.

FIG. 2 is a diagram of an architecture of a system according to an embodiment of this application. As shown in FIG. 2, the system includes a CTF entity 201, an R-CHF entity 202, a primary CHF entity 203, an ABMF entity 204, a CGF entity 205, and an RF entity 206.

Optionally, the R-CHF entity is a local CHF entity, an edge CHF entity, or a serving CHF entity. The edge CHF entity is a CHF entity that provides charging for an edge service.

For a user equipment, a CHF that provides online quota management and/or user charging data record generation for the user is referred to as a primary CHF entity 203 of the user equipment. The primary CHF entity 203 is connected to the ABMF entity 204, the RF entity 206, and the CGF entity 205, to perform quota management, charging data record generation, account balance management, and the like. The primary CHF entity 203 is connected to a CRM, a top-up center, a charging capability provisioning system, an accounting system, and the like, to implement management of account information and subscription information of the user equipment. The primary CHF entity 203 usually does not vary with a location of the user equipment.

For a user equipment, when the primary CHF entity 203 cannot provide charging because a user uses a service beyond a processing range of the primary CHF 203 of the user equipment or the like, a connection between the CTF entity 201 and the primary CHF entity 203 may be implemented through the R-CHF entity 202. The R-CHF entity generates a first charging resource for the CTF entity, and establishes and maintains an association relationship between a second charging resource generated by the primary CHF entity and the first charging resource. The primary CHF entity charges, through the first charging resource and the second charging resource, a service provided by the CTF entity. Optionally, the R-CHF entity 202 and the primary CHF entity 203 belong to a same operator or belong to different operators. The R-CHF entity 202 may change as the user moves or a user access service changes.

In an example, functions of the R-CHF entity 202 include but are not limited to: discovery of the primary CHF entity 203, forwarding of charging information, generation of an R-CHF charging data record, and insertion, removal, and switching of the R-CHF entity 202.

The following specifically describes an implementation procedure of this application.

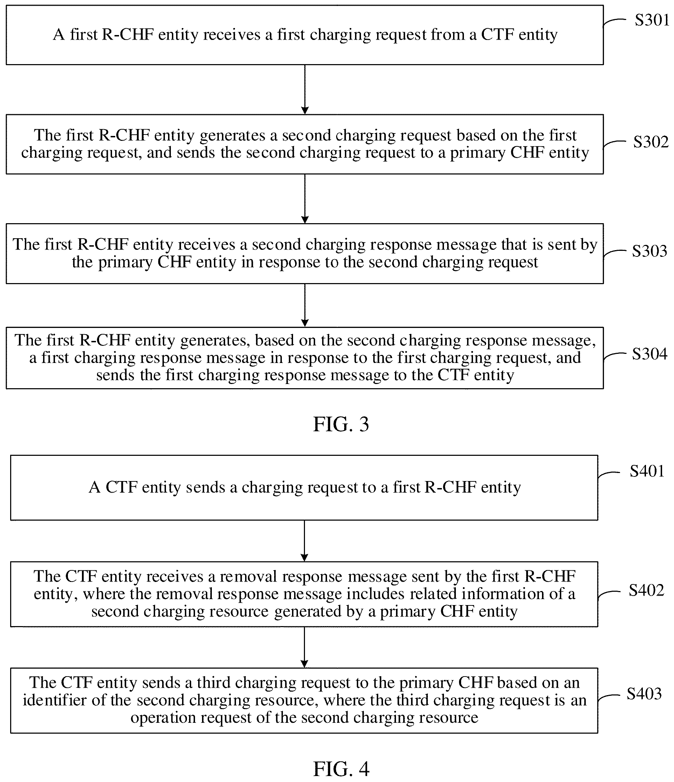

FIG. 3 is a schematic flowchart of a charging method according to an embodiment of this application. The method is applied to a first R-CHF entity. In an example, the first R-CHF entity is the R-CHF entity 202 in FIG. 2. As shown in FIG. 3, the method includes the following steps.

S301: The first R-CHF entity receives a first charging request from a CTF entity.

The first charging request is used to request to create, update, or release a first charging resource, and the first charging resource is a charging resource for charging interaction between the CTF entity and the first R-CHF entity.

Optionally, the first charging request includes first capability information, and the first capability information is capability information that is provided by the CTF entity and that can be used for interaction between the first R-CHF entity and the CTF entity.

In an example, the first capability information includes at least one of a payload size that is of a charging message for the first charging resource and that is supported by the CTF entity, first idle duration during collection of charging information performed by the CTF entity for the first charging resource, or a charging feature. In another example, the charging feature is a characteristic defined in 6.1.8 of 3GPP TS 32.291, for example, whether a quota management suspension capability is supported.

The charging message for the first charging resource is a message exchanged between the first R-CHF entity and the CTF entity through the first charging resource, for example, the first charging request or a first charging response message.

S302: The first R-CHF entity generates a second charging request based on the first charging request, and sends the second charging request to a primary CHF entity.

The second charging request is used to request to create, update, or release a second charging resource, and the second charging resource is a charging resource for charging interaction between the first R-CHF entity and the primary CHF entity.

Optionally, the second charging request includes second capability information, and the second capability information represents a capability used for interaction between the primary CHF entity and the first R-CHF entity. The second capability information is determined by the first R-CHF entity based on the first capability information.

In an example, the second capability information includes at least one of a payload size that is of a charging message for the second charging resource and that is supported by the first R-CHF entity, second idle duration during collection of charging information performed by the first R-CHF entity for the second charging resource, or a charging feature.

The charging message for the second charging resource is information exchanged between the first R-CHF entity and the primary CHF entity, for example, the second charging request or a second charging response message.

In a specific implementation, that the second capability information is determined by the first R-CHF entity based on the first capability information includes:
When the first capability information includes a first payload size, the second capability information also includes a second payload size, and the second payload size is a smaller one of the first payload size and a payload size that is of a charging message for the second charging resource and that is supported by the first R-CHF entity; or when the first capability information does not include the payload size, the second capability information may include the payload size or may not include the payload size; and in this case, when the second capability information includes the payload size, the payload size of the second capability information is the payload size that is of the charging message and that is supported by the first R-CHF entity;
when the first capability information includes the first idle duration, the second capability information also includes the second idle duration, and the second idle duration is a smaller one of the first idle duration and idle duration during collection of charging information performed by the first R-CHF entity for the second charging resource; or when the first capability information does not include the first idle duration, the second capability information may include the second idle duration or may not include the second idle duration; and in this case, when the second capability information includes the second idle duration, the second idle duration is the idle duration in collection of the charging information by the first R-CHF entity for the second charging resource; and
when the first capability information includes the charging feature, the second capability information also includes the charging information, and the charging feature of the second capability information is an intersection of the charging feature of the first capability information and a charging feature supported by the first R-CHF entity; or when the first capability information does not include the charging feature, the second capability information may include the charging feature or may not include the charging feature; and in this case, when the second capability information includes the charging feature, the charging feature of the second capability information is the charging feature supported by the first R-CHF entity.

It should be noted that, the foregoing process of determining the capability information is for a scenario in which the first charging request is used to request to perform session-based converged charging, and for a scenario in which the first charging request is used to request to perform one-time event charging, the second charging request carries charging information in the first charging request that is sent by the CTF, and does not carry the first capability information.

S303: The first R-CHF entity receives a second charging response message that is sent by the primary CHF entity in response to the second charging request.

The second charging response message includes third capability information, and the third capability information is capability information that is determined by the primary CHF entity based on the second charging request and that is used for interaction between the primary CHF entity and the first R-CHF entity.

In a specific example, when the second charging request does not include the second capability information, the third capability information is the capability information that is supported and provided by the primary CHF entity and that is used for interaction between the primary CHF entity and the first R-CHF entity; or when the second charging request includes the second capability information, the third capability information is the capability information that is determined by the primary CHF entity based on the second capability information and that is used for interaction between the primary CHF entity and the first R-CHF entity.

In an example, the third capability information includes at least one of the payload size of a charging message for the second charging resource, third idle duration during collection of charging information performed by the first R-CHF entity for the second charging resource, a fourth characteristic, or a second charging resource trigger (trigger) condition setting.

In a specific implementation, that the third capability information is determined by the primary CHF entity based on the second capability information includes:
When the second capability information includes the second payload size, the third capability information also includes a third payload size, and the third payload size is a smaller one of the second payload size and a payload size that is of a charging message for the second charging resource and that is supported by the primary CHF entity; or when the second capability information does not include the second payload size, the third capability information may include the third payload size or may not include the third payload size; and when the third capability information includes the third payload size, the third payload size is the payload size that is of the charging message for the second charging resource and that is supported by the primary CHF entity;
when the second capability information includes the second idle duration, the third capability information also includes the third idle duration, and the third idle duration is a smaller one of the second idle duration and idle duration that is supported by the primary CHF entity and that is used for the second charging resource; or when the second capability information does not include the second idle duration, the third capability information may include the third idle duration or may not include the third idle duration; and in this case, when the third capability information includes the third idle duration, the idle duration that is for a charging resource and that is in the third capability information is the idle duration that is supported by the primary CHF entity and that is used for the second charging resource; and
when the second capability information includes the second charging feature, the third capability information also includes third charging information, and the third charging feature is an intersection of the second charging feature and a charging feature supported by the primary CHF entity; or when the second capability information does not include the second charging feature, the third capability information may include the third charging feature or may not include the third charging feature; and when the third capability information includes the third charging feature, the third charging feature is the charging feature supported by the primary CHF entity.

The third capability information may further include the second charging resource trigger condition setting, and the second charging resource trigger condition setting includes trigger status information (for example, a trigger list, an activated/deactivated state of a trigger in a list, and an immediate reporting/delayed reporting state of a trigger in a list) and a trigger threshold (some triggers have thresholds, for example, a threshold of statistics duration, traffic, or an event quantity).

S304: The first R-CHF entity generates, based on the second charging response message, the first charging response message in response to the first charging request, and sends the first charging response message to the CTF entity.

The first charging response message includes fourth capability information, and the fourth capability information is capability information that is determined by the first R-CHF entity based on the third capability information and that is used for interaction between the first R-CHF entity and the CTF entity.

In an example, the fourth capability information includes at least one of the payload size of the charging message for the first charging resource, idle duration for the first charging resource, a charging feature supported by the first charging resource, or a first charging resource trigger (trigger) condition setting.

In a specific embodiment, that the fourth capability information is determined by the first R-CHF entity based on the third capability information includes:
When the third capability information includes the third payload size, the fourth capability information also includes the fourth payload size, and the fourth payload size is a smaller one of the third payload size and a payload size that is of the charging message for the first charging resource and that is supported by the first R-CHF entity.

When the third capability information includes the third idle duration, the fourth capability information also includes fourth idle duration, and the fourth idle duration is a smaller one of the third idle duration and idle duration during collection of charging information performed by the first R-CHF entity for the second charging resource.

When the third capability information includes the third charging feature, the fourth capability information also includes the fourth charging feature, and the fourth charging feature is an intersection of the third charging feature and the charging feature supported by the first R-CHF entity.

When the third capability information includes the second charging resource trigger condition setting, the fourth capability information includes the first charging resource trigger condition setting. Trigger status information in the first charging resource trigger condition setting is a union of the trigger status information in the second charging resource trigger condition setting and trigger status information determined by the first R-CHF entity. A trigger threshold (limit) in the first charging resource trigger condition setting is a smaller one of the trigger threshold in the second charging resource trigger condition setting and a trigger threshold determined by the first R-CHF entity.

In a specific implementation, when the second charging request includes the second capability information, that the fourth capability information is determined by the first R-CHF entity based on the third capability information and the second capability information includes:
When the third capability information includes the third payload size, the fourth capability information also includes the fourth payload size. If the second capability information includes the second payload size, the fourth payload size is the third payload size. It should be noted herein that, because the second payload size has already been considered when the third payload size is determined, the fourth payload size herein implicitly is a smaller one of the third payload size and a payload size that is of a charging message for the second charging resource and that is supported by the first R-CHF entity.

When the third capability information includes the third idle duration, the fourth capability information also includes the fourth idle duration. If the second capability information includes the second idle duration, the fourth idle duration is the third idle duration. It should be noted herein that, because the second idle duration has already been considered when the third idle duration is determined, the fourth idle duration herein implicitly is a smaller one of the third idle duration and the idle duration in collection of the charging information by the first R-CHF entity for the second charging resource.

When the third capability information includes the third charging feature, the fourth capability information also includes the fourth charging feature. If the second capability information includes the second charging feature, the fourth charging feature is the third charging feature. It should be noted herein that, because the second charging feature has already been considered when the third charging feature is determined, the fourth charging feature herein implicitly is an intersection of the third charging feature and the charging feature supported by the first R-CHF entity.

A trigger setting of the third capability information indicates a trigger condition and a trigger manner for the primary CHF entity to indicate the first R-CHF to report the charging information on the second charging resource, and a trigger setting of the fourth capability information indicates a trigger condition and a trigger manner for the first R-CHF entity to indicate the CTF entity to report the charging information.

A trigger setting includes status information of the trigger setting and a threshold of the trigger setting. The status information of the trigger setting includes an activated state of a trigger, an immediate reporting/delayed reporting state of an activated trigger, and a threshold of the activated trigger, for example, the threshold of the statistics duration, the traffic, or the event quantity.

In an example, that the trigger status information (namely, status information of the trigger setting of the fourth capability information) in the first charging resource trigger condition setting is the union of the trigger status information (namely, status information of the trigger setting of the third capability information) in the second charging resource trigger condition setting and the status information of the trigger setting determined by the first R-CHF entity includes:
When the trigger setting of the third capability information is the activated state and/or the trigger setting determined by the first R-CHF entity is the activated state, the trigger setting of the fourth capability information is the activated state; or
when the trigger setting of the third capability information is the immediate reporting state and/or the trigger setting determined by the first R-CHF entity is the immediate reporting state, the trigger setting of the fourth capability information is the immediate reporting state, where
the threshold of the trigger in the fourth capability information is a smaller one of a threshold of the trigger in the third capability information and a threshold of the trigger determined by the first R-CHF entity.

In an example, a parameter value herein may be the traffic, the statistics duration, the event quantity, or the like.

For example, if the trigger setting of the third capability information indicates that a user terminal performs reporting when traffic used by the user terminal exceeds 500 M, and the trigger setting determined by the first R-CHF entity indicates that the user terminal performs reporting when the traffic used by the user terminal exceeds 200 M, the trigger setting of the fourth capability information indicates that the user terminal performs reporting when the traffic used by the user terminal exceeds 200 M.

Capability negotiation is performed between the CTF entity and the first R-CHF entity and between the first R-CHF entity and the primary CHF entity, to help resolve a problem that a charging error occurs due to a capability difference.

In a possible implementation, the method in this embodiment further includes:
The first R-CHF entity performs charging processing based on the first charging request.

In a possible implementation, in a scenario (scenario 1) in which the first charging resource is not established between the CTF entity and the first R-CHF entity, and the second charging resource is not established between the first R-CHF entity and the primary CHF entity, the CTF entity needs to establish the first charging resource with the first R-CHF entity. In this case, the first charging request is a first charging resource creation request, and is used to request to create the first charging resource. That the first R-CHF entity performs charging processing based on the first charging request includes:
When the first charging request is used to request to perform session-based converged charging, the first R-CHF entity generates the charging resource corresponding to the first charging request, opens a first R-CHF charging data record in the first charging resource, and writes the charging information in the first charging request into the first R-CHF charging data record.

When the first charging request is used to request to perform one-time event charging, the first R-CHF entity generates the charging resource corresponding to the first charging request, and generates the first R-CHF charging data record based on the charging resource corresponding to the first charging request and the charging information in the first charging request. The first R-CHF charging data record includes the charging information in the first charging request.

The first R-CHF entity needs to establish a second charging resource with the primary CHF entity, where the second charging request is a charging resource creation request; and the second charging response message includes but is not limited to an identifier of the second charging resource generated by the primary CHF entity for the first R-CHF entity, a charging processing result, and the third capability information. When the first R-CHF entity receives the second charging response message sent by the primary CHF entity, it indicates that establishment of the second charging resource between the first R-CHF entity and the primary CHF entity is completed.

For the first charging request, the first charging response message includes but is not limited to an identifier of the first charging resource generated by the first R-CHF entity for the CTF entity, a charging processing result, and the fourth capability information. When the CTF entity receives the first charging response message, it indicates that establishment of the charging resource between the first R-CHF entity and the CTF entity is completed.

In another possible implementation, in a scenario (scenario 2) in which a charging resource has been established between the CTF entity and the primary CHF entity, if the primary CHF entity cannot provide charging because a location of a user equipment changes, a service changes, or the CTF entity that serves the user equipment changes, the first R-CHF entity needs to be introduced as a relay. In this case, the first charging request is a charging resource update request, and the first charging request carries an identifier of the second charging resource generated by the primary CHF entity. That the first R-CHF entity performs charging processing based on the first charging request includes:
The first R-CHF entity obtains the second charging resource from the CTF entity based on the identifier of the second charging resource, opens a first R-CHF charging data record in the second charging resource, and writes the charging information in the first charging request into the first R-CHF charging data record, to complete updating of the charging resource. The first R-CHF entity generates the second charging request based on the identifier of the second charging resource, where the second charging request is an operation request for the second charging resource.

In an example, the second charging request is the charging resource update request or a charging resource release request, and the second charging request carries the identifier of the second charging resource generated by the primary CHF entity, so that when receiving the second charging request, the primary CHF entity performs charging processing based on the second charging resource, to complete updating of the charging resource or release related information of the second charging resource when the primary CHF entity completes execution of charging processing.

Optionally, the second charging request further carries a notification receiving address for the first R-CHF entity, and the notification receiving address is used to update a notification address corresponding to the second charging resource on the primary CHF entity. The notification address is used by the primary CHF entity to subsequently send a notification message to the first R-CHF entity.

In another possible implementation, the second charging request is the charging resource update request, the second charging request carries adjustment indication information, and the adjustment indication information indicates that the first R-CHF entity has adjusted a trigger setting delivered by the primary CHF entity.

In another possible implementation, the method in this embodiment further includes:
The first R-CHF entity determines an address of the primary CHF entity in two specific manners.

Manner 1: The first charging request carries the address of the primary CHF entity, and the first R-CHF entity directly obtains the address of the primary CHF entity from the first charging request.

Manner 2: The first charging request carries a user identifier, and the first R-CHF entity queries information in a network resource function (network resource function, NRF) entity or charging configuration information in the CTF entity based on the user identifier, to determine the address of the primary CHF entity.

It should be understood that, the address of the primary CHF entity herein refers to a uniform resource identifier (uniform resource identifier, URI) that is for providing a corresponding service and that is of the primary CHF entity.

In a possible implementation, when a charging resource has been established between the CTF entity and a second R-CHF entity, and a charging resource has been established between the second R-CHF entity and the primary CHF entity, if the second R-CHF entity cannot provide a relay for the CTF entity and the primary CHF entity because the location of the user equipment changes, or the service changes, or the CTF entity that serves the user equipment changes. The CTF entity determines to switch an R-CHF entity, that is, switch from the second R-CHF entity to the first R-CHF entity. In this case, the method in this embodiment further includes:
The first R-CHF entity determines the second R-CHF entity, and obtains related information of the first charging resource from the second R-CHF entity, where the first charging resource is a charging resource generated by the second R-CHF entity for the CTF entity.

Related information of a charging resource includes but is not limited to an identifier of the charging resource and context information of the charging resource, such as user information and quota information allocated by the primary CHF.

The related information that is of the first charging resource and that is cached in the second R-CHF entity is migrated to the first R-CHF entity, so that switching from the second R-CHF entity to the first R-CHF entity is implemented.

In a possible implementation, the first charging request carries switching information for switching from the second R-CHF entity to the first R-CHF entity. That the first R-CHF entity obtains the related information of the first charging resource from the second R-CHF entity includes:
The first R-CHF entity obtains the related information of the first charging resource from the second R-CHF entity based on the switching information; and
the method in this embodiment further includes:
   The first R-CHF entity generates the second charging request based on the obtained related information of the first charging resource.

In an example, the switching information for switching from the second R-CHF entity to the first R-CHF entity includes but is not limited to a switching indication or an identifier or an address of the second R-CHF entity. The switching indication indicates the second R-CHF entity to switch to the first R-CHF entity. In addition, the first R-CHF entity may further determine the address of the second R-CHF entity based on the switching information. The first R-CHF entity obtains the related information of the first charging resource from the second R-CHF entity based on the address of the second R-CHF entity.

In a possible implementation, when the charging resource has been established between the CTF entity and the first R-CHF entity, and the charging resource has been established between the first R-CHF entity and the primary CHF entity, if the primary CHF entity can directly provide charging, without using the first R-CHF entity as the relay, because the location of the user equipment changes, or the service changes, or the CTF entity that serves the user equipment changes, the CTF entity determines to remove the first R-CHF entity.

For the foregoing case, the method in this embodiment further includes:
The first R-CHF entity receives an R-CHF removal request sent by the CTF entity, where the R-CHF removal request includes a removal indication, and the removal indication is used for the first R-CHF to return the related information of the second charging resource generated by the primary CHF entity; and the first R-CHF entity sends, for the R-CHF removal request, a removal response message to the CTF entity, where the removal response message includes the related information of the second charging resource generated by the primary CHF entity.

The related information of the second charging resource includes but is not limited to the identifier of the second charging resource and context information of the second charging resource.

The CTF entity performs next charging application based on the related information of the second charging resource. To be specific, the CTF entity sends the charging resource update request or the charging resource release request to the primary CHF based on the related information of the second charging resource.

Further, after the CTF entity successfully interacts with the primary CHF, the CTF entity sends a first charging resource release request to the first R-CHF entity, to request the first R-CHF entity to release the first charging resource.

In a possible implementation, the method in this embodiment further includes:
When receiving the R-CHF removal request sent by the CTF entity, the first R-CHF entity directly releases the first charging resource when returning the related information of the second charging resource to the CTF entity.

When the first R-CHF entity does not need to provide the relay for the CTF entity and the primary CHF entity, the related information that is of the charging information and that is cached in the first R-CHF entity is deleted, to save storage resources of the first R-CHF entity.

It can be learned that, in the solution of this embodiment, when the primary CHF entity cannot provide charging, the R-CHF entity between the CTF entity and the primary CHF entity is dynamically introduced, so that normal charging can be ensured when the primary CHF entity cannot provide a charging service, implementation of an operator network is simplified, and service use by a user and charging by an operator for the user are not affected, to improve user experience. In addition, to avoid a case in which normal interaction cannot be performed between the CTF entity and the R-CHF entity and between the R-CHF entity and the primary CHF entity, capability negotiation is performed between the CTF entity and the R-CHF entity and between the R-CHF entity and the primary CHF entity. In a scenario in which a charging resource has been established between the CTF entity and the R-CHF entity and a charging resource has been established between the R-CHF entity and the primary CHF entity, when the primary CHF entity can perform charging, the CTF entity dynamically removes the R-CHF entity, so that implementation of the operator network is simplified, and service use by the user and charging by the operator for the user are not affected, to improve user experience. In a scenario in which the charging resource has been established between the CTF entity and the second R-CHF entity and the charging resource has been established between the second R-CHF entity and the primary CHF entity, if the second R-CHF entity cannot provide a relay service between the CTF entity and the primary CHF entity, normal charging is ensured by switching the second R-CHF entity serving as the relay to the first R-CHF entity, so that implementation of the operator network is simplified, and service use by the user and charging by the operator for the user are not affected, to improve user experience.

FIG. 4 is a schematic flowchart of another charging method according to an embodiment of this application. The method shown in FIG. 4 is applied to the CTF entity 201 in FIG. 2. As shown in FIG. 4, the method includes the following steps.

S401: A CTF entity sends a charging request to a first R-CHF entity.

In a specific implementation, when the charging request is an R-CHF removal request on a premise that a charging resource has been established between the first R-CHF entity and a primary CHF entity, the R-CHF removal request includes a removal indication, and the removal indication indicates the first R-CHF to return related information of a second charging resource generated by the primary CHF entity. The primary CHF entity provides online quota management and charging data record generation.

Specifically, on a premise that a charging resource has been established between the CTF entity and the first R-CHF entity, and the charging resource has been established between the first R-CHF entity and the primary CHF entity, if the primary CHF entity can directly provide charging, without using the first R-CHF entity as a relay, because a location of a user equipment changes, or a service changes, or the CTF entity that serves the user equipment changes, the CTF entity determines to remove the first R-CHF entity. In this case, the CTF entity sends the R-CHF removal request to the first R-CHF entity.

S402: The CTF entity receives a removal response message sent by the first R-CHF entity, where the removal response message includes the related information of the second charging resource generated by the primary CHF entity.

In an example, the related information of the second charging resource includes but is not limited to an identifier of the second charging resource and an address of the primary CHF entity.

It should be noted that, the second charging resource is a charging resource generated by the primary CHF entity for the first R-CHF entity.

S403: The CTF entity sends a third charging request to the primary CHF based on the identifier of the second charging resource, where the third charging request is an operation request of the second charging resource.

Optionally, the third charging request is a charging resource update request or a charging resource release request.

In a possible implementation, before or after the CTF entity sends the third charging request to the first R-CHF entity, the method in this embodiment further includes:
The CTF entity sends a charging resource release request to the first R-CHF entity, where the charging resource release request is used to request to release related information of the charging resource created by the first R-CHF entity; and the CTF entity receives a charging resource release response message sent by the first R-CHF entity, where the response message indicates that the first R-CHF entity has released the related information of the charging resource created by the first R-CHF entity.

The first R-CHF entity is indicated to release the related information of the charging resource, so that storage resources of the first R-CHF can be saved.

In another possible implementation, when the charging request is an R-CHF insertion request on a premise that a charging resource has been established between the CTF entity and the primary CHF entity, the R-CHF insertion request includes the related information of the second charging resource generated by the primary CHF entity; and
the CTF entity receives a charging response message sent by the first R-CHF entity, where the charging response message includes a result of sending the third charging request by the first R-CHF to the primary CHF based on the related information of the second charging resource. The result herein includes a charging processing success or a charging processing failure for the third charging request.

It can be learned that, in the solution of this embodiment, in a scenario in which a charging resource has been established between the CTF entity and the R-CHF entity and a charging resource has been established between the R-CHF entity and the primary CHF entity, when the primary CHF entity can perform charging, the CTF entity dynamically removes the R-CHF entity, so that implementation of an operator network is simplified, and service use by a user and charging by an operator for the user are not affected, to improve user experience.

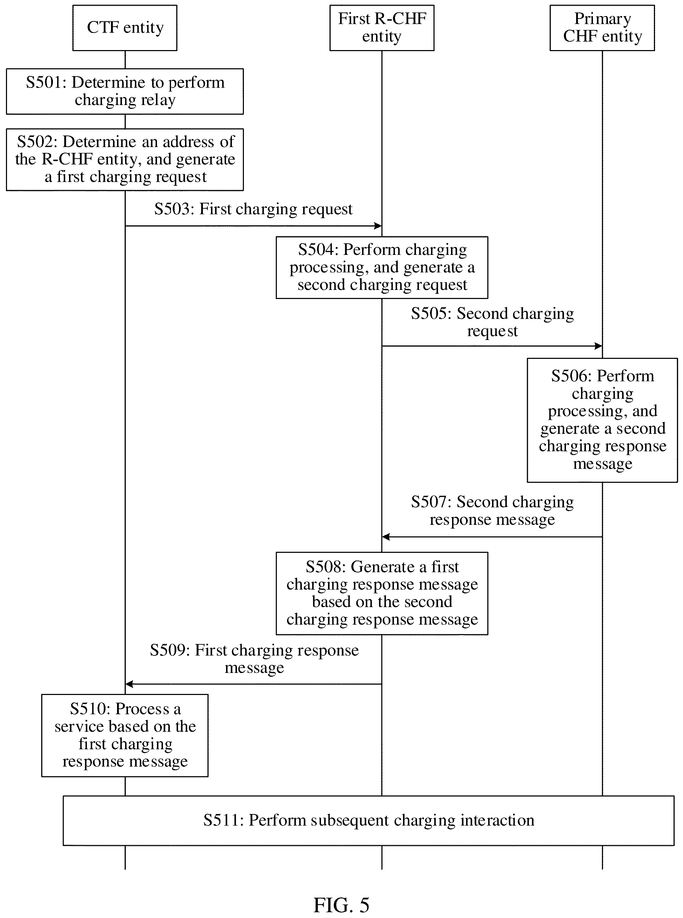

FIG. 5 is a schematic interaction flowchart of a charging method according to an embodiment of this application. As shown in FIG. 5, the method includes the following steps.

S501: A CTF entity determines to perform charging relay.

In an example, a user uses a new service through a user equipment, but a primary CHF entity cannot provide charging for the new service. In this case, charging relay needs to be performed.

In another example, a location change of the user causes the user equipment to be located in an area in which the primary CHF cannot provide charging. For example, the user equipment moves from an area covered by one operator network to an area covered by another operator network, or a same operator network covers a plurality of areas, and the user equipment moves from one area to another area. As a result, the primary CHF cannot provide charging. In this case, charging relay needs to be performed.

It should be noted that, a charging process shown in FIG. 5 is for a scenario in which no converged charging resource is established. For the foregoing case, if no converged charging resource is established, the converged charging resource is established.

S502: The CTF entity determines an address of a first R-CHF entity, and generates a first charging request.

The first charging request is used to request to create a first charging resource for charging interaction between the CTF entity and the first R-CHF entity.

It should be noted herein that, there is no specific sequence between the operation of "determining the address of the first R-CHF entity" and the operation of "generating the first charging request" that are performed by the CTF entity. Optionally, the CTF entity first performs the operation of "determining the address of the first R-CHF entity", and then performs the operation of "generating the first charging request"; or the CTF entity first performs the operation of "generating the first charging request", and then performs the operation of "determining the address of the first R-CHF entity"; or both operations are simultaneously performed.

Optionally, the first charging request includes first capability information, and the first capability information is capability information that is provided by the CTF entity and that can be used for interaction between the first R-CHF entity and the CTF entity. The first capability information includes at least one of a first payload size that is supported by the CTF entity and that is for a charging message used for the first charging resource, first idle duration in collection of charging information by the CTF entity for the first charging resource, or a first charging characteristic. Certainly, the first capability information may further include other information. This is not limited herein.

In an example, a charging characteristic is a characteristic defined in 6.1.8 of 3GPP TS 32.291, for example, whether a quota management suspension capability is supported.

The charging message used for the first charging resource is a message exchanged between the first R-CHF entity and the CTF entity, for example, the first charging request or a first charging response message.

S503: The CTF entity sends the first charging request to the first R-CHF entity.

In an example, the CTF entity sends the first charging request to the first R-CHF entity based on the address of the first R-CHF entity.

Optionally, the CTF entity determines the address of the first R-CHF entity in the following manners.

Manner 1: The CTF entity determines the address of the R-CHF entity based on an identifier of the CTF entity. In an example, the CTF queries a correspondence table based on the identifier of the CTF entity, to determine the address of the first R-CHF entity, where the correspondence table is a table of a correspondence between the identifier of the CTF entity, an identifier of an R-CHF entity, and an address of an R-CHF entity.

Manner 2: The CTF entity determines the address of the first R-CHF entity based on location information of the user equipment. In an example, the CTF entity determines a location of the user equipment based on the location information of the user equipment, determines a CHF entity that provides charging for an area to which the location of the user equipment belongs, determines the CHF entity as the first R-CHF entity, and obtains the address of the first R-CHF entity.

Manner 3: The CTF entity determines the address of the first R-CHF based on information of a service used by the user equipment, where the R-CHF is a CHF entity that provides charging for the service used by the user equipment. When there are a plurality of CHF entities that provide charging for the service used by the user equipment, the CTF entity selects a CHF entity with a smallest distance between a coverage area and the user equipment as the first R-CHF entity.

It should be understood that, the correspondence table, the coverage area of the CHF, information of the service for which the CHF can provide charging, and the like are stored in charging configuration information of an NRF entity or the CTF entity.

S504: The first R-CHF entity executes charging processing, and generates a second charging request.

The second charging request is used to request to establish a second charging resource for charging interaction between the first R-CHF and the primary CHF.

Specifically, when the first charging request is used to request to execute converged charging that is based on the first charging resource, the first R-CHF entity generates the first charging resource corresponding to the first charging request, and opens a first R-CHF charging data record in the first charging resource, so that the charging information is written into the charging data record; or when the first charging request is used to request to execute one-off event charging, the first R-CHF generates the first charging resource corresponding to the first charging request, and generates the first R-CHF charging data record. It should be understood that, opening the first R-CHF charging data record refers to creating an R-CHF charging data record and waiting for the charging information to be written into; and generating the first R-CHF charging data record includes creating the first R-CHF charging data record, writing the charging information into the first R-CHF charging data record, and then closing the first R-CHF charging data record.

It should be understood that, the first R-CHF charging data record herein includes a CDR charging data record. The first charging resource includes but is not limited to a user identifier, an identifier of the user equipment, a location of the user equipment, a service subscribed by the user, a traffic package, used traffic, and the like.

Optionally, the second charging request includes second capability information, and the second capability information represents a capability used for interaction between the primary CHF entity and the first R-CHF entity. The second capability information is obtained by the first R-CHF entity based on the first capability information.

The second capability information includes at least one of a second payload size that is of a charging message for the second charging resource and that is supported by the first R-CHF entity, second idle duration during collection of charging information performed by the first R-CHF entity for the second charging resource, or a second charging feature. Certainly, the second charging request may further include other information. This is not limited herein.

The charging message for the second charging resource is information exchanged between the first R-CHF entity and the primary CHF entity, for example, the second charging request or a second charging response message.

In a specific implementation, that the second capability information is determined by the first R-CHF entity based on the first capability information includes:
When the first capability information includes a first payload size, the second capability information also includes the second payload size, and the second payload size is a smaller one of the first payload size and a payload size that is of a charging message for the second charging resource and that is supported by the first R-CHF entity; or when the first capability information does not include the first payload size, the second capability information may include the second payload size or may not include the second payload size; and in this case, when the second capability information includes the second payload size, the second payload size is a payload size that is of a charging message for the second charging resource and that is supported by the first R-CHF entity;
when the first capability information includes the first idle duration, the second capability information also includes the second idle duration, and the second idle duration is a smaller one of the first idle duration and idle duration during collection of charging information performed by the first R-CHF entity for the second charging resource; or when the first capability information does not include the first idle duration, the second capability information may include the second idle duration or may not include the second idle duration; and when the second capability information includes the second idle duration, the second idle duration is the idle duration in collection of the charging information by the first R-CHF entity for the second charging resource; and
when the first capability information includes the first charging feature, the second capability information also includes the second charging feature, and the second charging feature is an intersection of the first charging feature and a charging feature supported by the first R-CHF entity; or when the first capability information does not include the first charging feature, the second capability information may include the second charging feature or may not include the second charging feature; and when the second capability information includes the second charging feature, the second charging feature is the charging feature supported by the first R-CHF entity.

It should be noted that, the foregoing process of determining the capability information is for a scenario in which the first charging request is used to request to perform session-based converged charging, and for a scenario in which the first charging request is used to request to perform one-time event charging, the second charging request carries charging information in the first charging request that is sent by the CTF, and does not carry the first capability information.

When the first charging request is used to request to perform one-time event charging, the second charging request is used to request to perform one-time event charging between the first R-CHF entity and the primary CHF entity. The second charging request includes the charging information in the first charging request.

Optionally, before the first R-CHF entity performs charging processing, if the CTF entity and the first R-CHF entity separately belong to different operators, the first R-CHF entity determines, based on operator configuration information, whether the user equipment is authorized to use a current service. When determining that the user equipment is authorized to use the current service, the first R-CHF entity performs charging processing; and when determining that the user equipment is not authorized to use the current service, the first R-CHF entity does not perform charging processing.

S505: The first R-CHF entity sends the second charging request to the primary CHF entity.

The first R-CHF entity queries the NRF entity for an address of the primary CHF entity based on the identifier of the user equipment or determines the address of the primary CHF entity from a local configuration, and then sends the second charging request to the primary CHF entity based on the address of the primary CHF entity.

S506: The primary CHF entity performs charging processing, and generates the second charging response message.

Specifically, when the second charging request is used to request to perform converged charging that is based on the second charging resource, the primary CHF entity generates the second charging resource, and performs charging processing based on the second charging resource, where the charging processing includes online charging processing or offline charging processing, to obtain a charging processing result, which includes an online charging processing result or an offline charging processing result. The primary CHF opens a primary CHF charging data record, to write the charging data and manage an account balance, for example, grant a quota.

Optionally, when the first R-CHF entity and the primary CHF entity separately belong to different operators, the primary CHF entity determines, based on subscription information of the user, whether the user equipment is authorized to use the current service; and if the user equipment is authorized to use the current service, the primary CHF entity performs charging processing; or when determining that the user equipment is not authorized to use the current service, the primary CHF entity does not perform charging processing.

When the second charging request is used to request to perform one-time event charging, the primary CHF entity generates a charging resource corresponding to the second charging request, generates the primary CHF charging data record, or deducts a balance.

It should be understood that, opening the primary CHF charging data record refers to creating the primary CHF charging data record; and generating the primary CHF charging data record includes creating the primary CHF charging data record, writing the charging information into the primary CHF charging data record, and then closing the primary CHF charging data record.

S507: The primary CHF entity sends the second charging response message to the first R-CHF entity.

The second charging response message includes the charging processing result. The charging processing result includes the online charging processing result and/or the offline charging processing result.

When the second charging request is a charging resource creation request, the second charging response message further includes an identifier of the second charging resource. Optionally, the second charging response message further includes third capability information. The third capability information is capability information that is determined by the primary CHF entity based on the second charging request and that is used for interaction between the primary CHF entity and the first R-CHF entity.

The third capability information includes at least one of a third payload size for a charging message for the second charging resource, third idle duration during collection of charging information performed by the first R-CHF entity for the second charging resource, a third charging feature, or a second charging resource trigger condition setting.

In a specific example, when the second charging request does not include the second capability information, the third capability information is the capability information that is provided by the primary CHF entity and that is used for interaction between the primary CHF entity and the first R-CHF entity; or when the second charging request includes the second capability information, the third capability information is determined by the primary CHF entity based on the second capability information.

In a specific implementation, that the third capability information is determined by the primary CHF entity based on the second capability information includes:
When the second capability information includes the second payload size, the third capability information also includes the third payload size, and the third payload size is a smaller one of the second payload size and a payload size that is of a charging message for the second charging resource and that is supported by the primary CHF entity; or when the second capability information does not include the second payload size, the third capability information may include the third payload size or may not include the third payload size; and in this case, when the third capability information includes the third payload size, the third payload size is the payload size that is of the charging message for the second charging resource and that is supported by the primary CHF entity;
when the second capability information includes the second idle duration, the third capability information also includes the third idle duration, and the third idle duration is a smaller one of the second idle duration and idle duration that is supported by the primary CHF entity and that is used for the second charging resource; or when the second capability information does not include the second idle duration, the third capability information may include the third idle duration or may not include the third idle duration, and in this case, when the third capability information includes the third idle duration, the third idle duration is idle duration that is supported by the primary CHF entity and that is used for the second charging resource; and
when the second capability information includes the second charging feature, the third capability information also includes third charging information, and the third charging feature is an intersection of the second charging feature and a charging feature supported by the primary CHF entity; or when the second capability information does not include the second charging feature, the third capability information may include the third charging feature or may not include the third charging feature; and in this case, when the third capability information includes the third charging feature, the third charging feature is the charging feature supported by the primary CHF entity.

The third capability information may further include the second charging resource trigger condition setting, and the second charging resource trigger condition setting includes trigger status information (for example, a trigger list, an activated/deactivated state of a trigger in a list, and an immediate reporting/delayed reporting state of a trigger in a list) and a trigger threshold (some triggers have thresholds, for example, a threshold of statistics duration, traffic, or an event quantity).

S508: The first R-CHF entity generates the first charging response message based on the second charging response message.

Specifically, the first charging response message includes the charging processing result. The charging processing result includes the online charging processing result and/or the offline charging processing result. When the first charging request is the charging resource creation request, the first charging response message further includes an identifier of the first charging resource.

Optionally, the first charging response message further includes fourth capability information, and the fourth capability information includes at least one of a fourth payload size of a charging message for the first charging resource, fourth idle duration during collection of charging information performed by the CTF entity for the first charging resource, a fourth charging feature, or a first charging resource trigger condition setting.

When the first charging request is used to request to perform converged charging that is based on a first charging session, and the second charging request does not include the second capability information, and when the third capability information includes the third payload size, the fourth capability information also includes the fourth payload size, and the fourth payload size is a smaller one of the third payload size and a payload size that is of the charging message for the first charging resource and that is supported by the first R-CHF entity;
when the third capability information includes the third idle duration, the fourth capability information also includes the fourth idle duration, and the fourth idle duration is a smaller one of the third idle duration and idle duration during collection of charging information performed by the first R-CHF entity for the second charging resource; and
when the third capability information includes the third charging feature, the fourth capability information also includes the fourth charging feature, and the fourth charging feature is an intersection of the third charging feature and the charging feature supported by the first R-CHF entity; or
when the first charging request is used to request to perform converged charging that is based on the first charging session, and the second charging request includes the second capability information, and when the third capability information includes the third payload size, the fourth capability information also includes the fourth payload size. If the second capability information includes the second payload size, the fourth payload size is the third payload size. It should be noted herein that, because the second payload size of the second capability information has already been considered when the third payload size of the third capability information is determined, the fourth payload size of the fourth capability information herein implicitly is a smaller one of the third payload size included in the third capability information and the payload size that is of the charging message for the first charging resource and that is supported by the first R-CHF entity. If the second capability information does not include the second payload size, the fourth payload size is a smaller one of the third payload size and the payload size that is of the charging message for the first charging resource and that is supported by the first R-CHF entity; and
when the third capability information includes the third idle duration, the fourth capability information also includes the fourth idle duration. If the second capability information includes the second idle duration, the fourth idle duration is the third idle duration. It should be noted herein that, because the second idle duration has already been considered when the third idle duration is determined, the fourth idle duration herein implicitly is a smaller one of the third idle duration and the idle duration in collection of the charging information by the first R-CHF entity for the second charging resource. If the second capability information does not include the second idle duration, the fourth idle duration is a smaller one of the third idle duration and the idle duration in collection of the charging information by the first R-CHF entity for the second charging resource; and
when the third capability information includes the third charging feature, the fourth capability information also includes the fourth charging feature. If the second capability information includes the second charging feature, the fourth charging feature is the third charging feature. It should be noted herein that, because the second charging feature has already been considered when the third charging feature is determined, the fourth charging feature herein implicitly is an intersection of the third charging feature and the charging feature supported by the first R-CHF entity. If the second capability information does not include the second charging feature, the fourth charging feature is an intersection of the third charging feature and the charging feature supported by the first R-CHF entity.

The first charging session is a charging session between the CTF entity and the first R-CHF entity.

In a possible implementation, when the third capability information further includes the second charging resource trigger condition setting, the fourth capability information includes the first charging resource trigger condition setting. Trigger status information in the first charging resource trigger condition setting is a union of the trigger status information in the second charging resource trigger condition setting and trigger status information determined by the first R-CHF entity. A trigger threshold (limit) in the first charging resource trigger condition setting is a smaller one of the trigger threshold in the second charging resource trigger condition setting and a trigger threshold determined by the first R-CHF entity.

A threshold of a trigger condition in a trigger setting of the fourth capability information is a smaller one of a threshold of a trigger condition in a trigger setting of the third capability information and a threshold of a trigger condition determined by the first R-CHF entity.

The trigger setting of the third capability information indicates a condition and a manner for the primary CHF entity to indicate the CTF entity to report the charging information, and the trigger setting of the fourth capability information indicates a condition and a manner that are determined by the first R-CHF entity and that are for indicating the CTF entity to report the charging information.

A trigger setting includes status information of the trigger setting and a threshold of the trigger setting. The status information of the trigger setting includes an activated state of a trigger, an immediate reporting/delayed reporting state of an activated trigger, and a threshold of the activated trigger, for example, the threshold of the statistics duration, the traffic, or the event quantity.

In an example, that the trigger status information (namely, status information of the trigger setting of the fourth capability information) in the first charging resource trigger condition setting is the union of the trigger status information (namely, status information of the trigger setting of the third capability information) in the second charging resource trigger condition setting and the status information of the trigger setting determined by the first R-CHF entity includes:
When the trigger setting of the third capability information is the activated state and/or the trigger setting determined by the first R-CHF entity is the activated state, the trigger setting of the fourth capability information is the activated state; or
when the trigger setting of the third capability information is the immediate reporting state and/or the trigger setting determined by the first R-CHF entity is the immediate reporting state, the trigger setting of the fourth capability information is the immediate reporting state.

In an example, a parameter value herein may be the traffic, the statistics duration, the event quantity, or the like.

For example, if the trigger setting of the third capability information indicates that a user terminal performs reporting when traffic used by the user terminal exceeds 500 M, and the trigger setting supported by the first R-CHF entity indicates that the user terminal performs reporting when the traffic used by the user terminal exceeds 200 M, the trigger setting of the fourth capability information indicates that the user terminal performs reporting when the traffic used by the user terminal exceeds 200 M.

S509: The first R-CHF entity sends the first charging response message to the CTF entity.

The first charging response message is used to respond to the first charging request.

S510: The CTF entity processes a service based on the first charging response message.

Specifically, the processed service includes continuing to collect service charging information, for example, collecting statistics on service usage, or performing a quota. Optionally, the first charging response message includes the fourth capability information, and the CTF entity performs setting based on the fourth capability information included in the first charging response message.

S511: The CTF entity, the first R-CHF entity, and the primary CHF entity perform subsequent charging interaction.

It should be understood that, for a subsequent interaction process, refer to related descriptions in S502 to S510. Details are not described herein again. Differences between the subsequent interaction process and S502 to S510 are shown in the following descriptions.
1. In S502, the CTF entity does not need to determine the address of the R-CHF.
2. In S504, the first R-CHF entity does not need to generate the first charging resource, does not need to create a new charging data record, and writes charging data into an opened charging data record, and the first R-CHF entity does not need to determine the address of the primary CHF entity. If the trigger setting in the third capability information is inconsistent with a trigger setting sent by the first R-CHF to the CTF entity, when receiving the trigger setting sent by the CTF entity, the first R-CHF sends the trigger setting to the primary CHF entity, and adds adjustment indication information to a message (for example, a charging request subsequently sent by the first R-CHF entity to the primary CHF entity) for reporting the trigger setting of the CTF entity to the primary CHF entity. The adjustment indication information indicates that the first R-CHF entity has adjusted the trigger setting delivered by the primary CHF entity.
3. In S506, the primary CHF entity does not need to generate a charging resource, and does not need to create a new charging data record, writes charging data into the charging data record, or performs quota deduction, and grants a quota if there is a quota.
4. If the primary CHF entity needs to send a notification message, the primary CHF entity sends the notification message to the first R-CHF entity, and the first R-CHF entity forwards the notification message to the CTF entity.

It can be learned that, in this embodiment, when the primary CHF entity cannot provide charging, the R-CHF entity between the CTF entity and the primary CHF entity is dynamically introduced, so that normal charging can be ensured when the primary CHF entity cannot provide a charging service, implementation of an operator network is simplified, and service use by a user and charging by an operator for the user are not affected, to improve user experience. In addition, to avoid a case in which normal interaction cannot be performed between the CTF entity and the R-CHF entity and between the R-CHF entity and the primary CHF entity, capability negotiation is performed between the CTF entity and the R-CHF entity and between the R-CHF entity and the primary CHF entity.

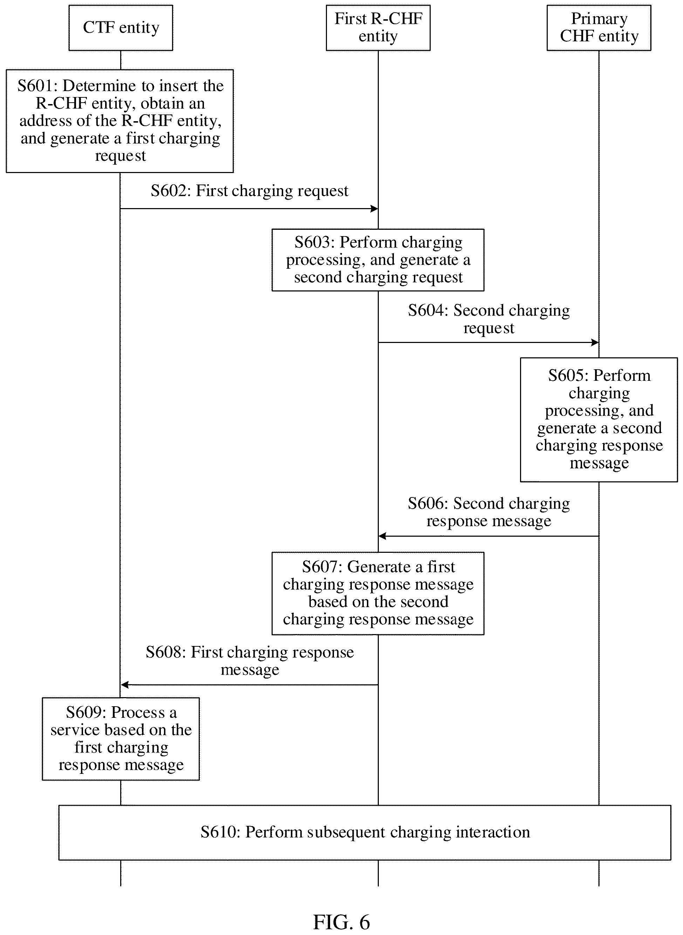

FIG. 6 is a schematic interaction flowchart of another charging method according to an embodiment of this application. FIG. 6 shows a scenario in which a charging resource has been established between a CTF entity and a primary CHF entity. As shown in FIG. 6, the method includes the following steps.

S601: The CTF entity determines to insert a first R-CHF entity, obtains an address of the first R-CHF entity, and generates a first charging request.

Specifically, in an example, a user uses a new service through a user equipment, but the primary CHF entity cannot provide charging for the new service. In this case, charging relay needs to be performed, and the CTF entity determines that the first R-CHF entity needs to be inserted.

In another example, a location change of the user causes the user equipment to be located in an area in which the primary CHF cannot provide charging. For example, the user equipment moves from an area covered by one operator network to an area covered by another operator network, or a same operator network covers a plurality of areas, and the user equipment moves from one area to another area. As a result, the primary CHF cannot provide charging. In this case, the CTF entity determines that the first R-CHF entity needs to be inserted. Therefore, the first charging request may be considered as an R-CHF insertion request.

In another example, the current CTF cannot provide charging for the user equipment, and a CTF entity that provides charging for the user equipment is switched from the current CTF entity to a new CTF entity. In this case, it is also determined that the R-CHF entity needs to be inserted. Operations performed by the CTF entity in subsequent steps are performed by the new CTF entity.

When determining that the first R-CHF entity needs to be inserted, the CTF entity determines an address of the first R-CHF entity. For a specific determining process, refer to related descriptions in S503. Details are not described herein again.

The first charging request is a charging resource update request or a charging resource creation request. The first charging request further includes an identifier of a second charging resource generated by the primary CHF entity. The first charging request further includes charging information, where the charging information includes but is not limited to an identifier of the user equipment, a location of the user equipment, a service subscribed by the user, a traffic package, and a used traffic amount. Optionally, the first charging request further includes first capability information. For specific descriptions of the first capability information, refer to related descriptions in S502. Details are not described herein again.

S602: The CTF entity sends the first charging request to the first R-CHF entity.

S603: The first R-CHF entity performs charging processing, and generates a second charging request.

Specifically, after receiving the first charging request, the first R-CHF entity caches the second charging resource indicated by the identifier of the second charging resource, so that the second charging resource is used in subsequent charging interaction. For example, the first R-CHF entity opens a first R-CHF charging data record, and writes charging data into the first R-CHF charging data record based on the charging information. The first R-CHF entity generates the second charging request based on the identifier of the second charging resource, where the second charging request is an operation request for the second charging resource. In other words, the second charging request is an update request or a release request for the second charging resource.

The second charging request includes an identifier of a charging resource of the CTF entity. Optionally, the second charging request further includes second capability information. The second capability information is obtained by the first R-CHF entity based on the first capability information. For a specific process, refer to related descriptions in S504. Details are not described herein again.

Optionally, the second charging request further carries a notification receiving address for the first R-CHF entity, and the notification receiving address is used to update a notification address corresponding to the second charging resource on the primary CHF entity. The notification address is used by the primary CHF entity to subsequently send a notification message to the first R-CHF entity.

S604: The first R-CHF entity sends the second charging request to the primary CHF entity.

The first R-CHF entity queries an NRF entity for an address of the primary CHF entity based on the identifier of the user equipment or determines the address of the primary CHF entity from a local configuration, and then sends the second charging request to the primary CHF entity based on the address of the primary CHF entity.

S605: The primary CHF entity performs charging processing, and generates a second charging response message.

Specifically, the primary CHF entity obtains the charging resource of the CTF entity based on the identifier of the charging resource of the CTF entity, and performs charging processing based on the charging resource of the CTF entity, where charging processing includes online charging processing or offline charging processing, to obtain a charging processing result, which includes an online charging processing result or an offline charging processing result. The primary CHF opens a primary CHF charging data record, to write the charging data and manage an account balance, for example, grant a quota.

Optionally, when the first R-CHF entity and the primary CHF entity separately belong to different operators, the primary CHF entity determines, based on subscription information of the user, whether the user equipment is authorized to use a current service; and if the user equipment is authorized to use the current service, the primary CHF entity performs charging processing; or when determining that the user equipment is not authorized to use the current service, the primary CHF entity does not perform charging processing.

The second charging response message includes the charging processing result. Optionally, the second charging response message includes third capability information. For a process of determining the third capability information, refer to related descriptions in S507. Details are not described herein again.

The third capability information includes at least one of a third payload size for a charging message for the second charging resource, third idle duration during collection of charging information performed by the first R-CHF entity for the second charging resource, a third charging feature, or a second charging resource trigger condition setting.

S606: The primary CHF entity sends the second charging response message to the first R-CHF entity.

S607: The first R-CHF entity generates a first charging response message based on the second charging response message.

Optionally, the first charging response message includes fourth capability information. The fourth capability information includes at least one of a fourth payload size of a charging message for the first charging resource, fourth idle duration during collection of charging information performed by the CTF entity for the first charging resource, a fourth charging feature, or a first charging resource trigger condition setting. It should be noted herein that, for a process of determining the fourth capability information, refer to related descriptions in S508. Details are not described herein again.

S608: The first R-CHF entity sends the first charging response message to the CTF entity.

S609: The CTF entity processes a service based on the first charging response message.

Specifically, the processed service includes continuing to collect service charging information, for example, collecting statistics on service usage, or performing a quota.

Optionally, the first charging response message includes the fourth capability information, and the CTF entity performs setting based on the fourth capability information included in the first charging response message.

S610: The CTF entity, the first R-CHF entity, and the primary CHF entity perform subsequent charging interaction.

Specifically, if the first charging request is used to request to update the charging resource, the CTF entity obtains an updated charging resource from the first charging response message, and caches the updated charging resource; and the CTF entity, the first R-CHF entity, and the primary CHF entity perform subsequent charging interaction. For a subsequent interaction process, refer to related descriptions in S502 to S510. Details are not described herein again. Differences between the subsequent interaction process and S502 to S510 are shown in the following descriptions.
1. In S504, if the trigger setting in the third capability information is inconsistent with a trigger setting sent by the first R-CHF to the CTF entity, when receiving the trigger setting sent by the CTF entity, the first R-CHF sends the trigger setting to the primary CHF entity, and adds adjustment indication information to a message (for example, a charging request subsequently sent by the first R-CHF entity to the primary CHF entity) for reporting the trigger setting of the CTF entity to the primary CHF entity. The adjustment indication information indicates that the first R-CHF entity has adjusted the trigger setting delivered by the primary CHF entity.
2. If the primary CHF entity needs to send a notification message, the primary CHF entity sends the notification message to the first R-CHF entity, and the first R-CHF entity forwards the notification message to the CTF entity.

If the first charging request is a charging resource release request, the CTF entity, the first R-CHF entity, and the primary CHF entity perform a charging resource release operation.

It can be learned that, in this embodiment, when the primary CHF entity cannot provide charging, the R-CHF entity between the CTF entity and the primary CHF entity is dynamically introduced, so that normal charging can be ensured when the primary CHF entity cannot provide a charging service, implementation of an operator network is simplified, and service use by a user and charging by an operator for the user are not affected, to improve user experience. In addition, to avoid a case in which normal interaction cannot be performed between the CTF entity and the R-CHF entity and between the R-CHF entity and the primary CHF entity, capability negotiation is performed between the CTF entity and the R-CHF entity and between the R-CHF entity and the primary CHF entity.

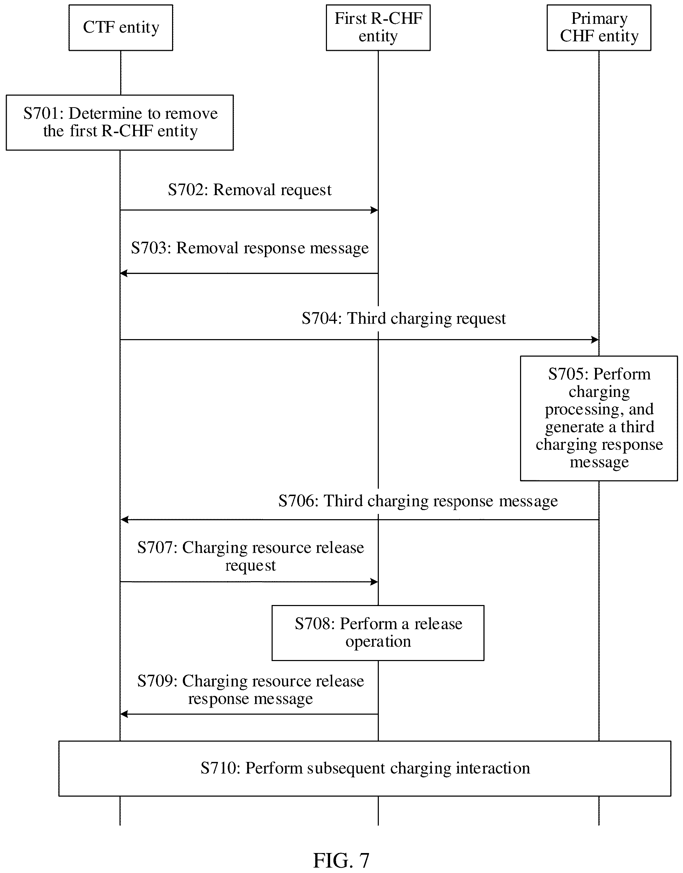

FIG. 7 is a schematic flowchart of another charging method according to an embodiment of this application. FIG. 7 shows a scenario in which a first charging resource has been established between a CTF entity and a first R-CHF entity and a second charging resource has been established between the first R-CHF entity and a primary CHF entity. As shown in FIG. 7, the method includes the following steps.

S701: The CTF entity determines to remove the first R-CHF entity.

Specifically, when a converged charging resource has been established between the CTF entity and a converged charging resource has been established between the first R-CHF entity and between the first R-CHF entity and the primary CHF entity, if the primary CHF entity can directly provide a charging service, without using the first R-CHF entity as a relay, because a location of a user equipment changes, or a service changes, or the CTF entity that serves the user equipment changes, it is determined to remove the first R-CHF entity.

S702: The CTF entity sends an R-CHF removal request to the first R-CHF entity.

The R-CHF removal request is used to request to prepare to remove the first R-CHF entity. The R-CHF removal request includes a removal indication, and the removal indication is used for the first R-CHF to return related information of a second charging resource generated by the primary CHF entity.

S703: The first R-CHF entity sends a removal response message to the CTF entity.

The removal response message includes the related information of the second charging resource generated by the primary CHF. The related information of the second charging resource includes but is not limited to an identifier of the second charging resource and an address of the primary CHF entity.

Specifically, after receiving the R-CHF removal request, the first R-CHF entity sends the related information of the second charging resource to the CTF entity, so that the CTF entity and the primary CHF entity complete subsequent charging interaction.

S704: The CTF entity generates a third charging request, and sends the third charging request to the primary CHF entity.

The third charging request is a charging resource update request or a charging resource release request, and is separately used to request to update or release the second charging resource generated by the primary CHF entity.

S705: The primary CHF entity performs charging processing, and generates a third charging response message.

Specifically, the primary CHF entity performs charging processing based on the charging resource of the primary CHF, where charging processing includes online charging processing or offline charging processing, to obtain a charging processing result, which includes an online charging processing result or an offline charging processing result. The primary CHF opens a primary CHF charging data record, to write charging data and manage an account balance, for example, grant a quota.

After execution of charging processing is completed, the primary CHF entity generates the third charging response message, where the third charging response message includes the charging processing result.

Optionally, when the R-CHF entity and the primary CHF entity separately belong to different operators, the primary CHF entity determines, based on subscription information of a user, whether the user equipment is authorized to use a current service; and if the user equipment is authorized to use the current service, the primary CHF entity performs charging processing; or when determining that the user equipment is not authorized to use the current service, the primary CHF entity does not perform charging processing.

S706: The primary CHF sends the third charging response message to the CTF entity.

S707: The CTF entity sends a charging resource release request to the first R-CHF entity.

The charging resource release request is used to request the first R-CHF entity to release related information of a charging resource created by the first R-CHF entity, and the related information includes but is not limited to the charging resource created by the first R-CHF entity.

S708: The first R-CHF entity performs a release operation.

Specifically, the first R-CHF entity releases the first charging resource created by the first R-CHF entity, and deletes the locally stored related information of the second charging resource created by the primary CHF entity. The related information includes but is not limited to an identifier of the first charging resource created by the primary CHF entity and interaction information between the first R-CHF entity and the primary CHF entity.

S709: The first R-CHF entity sends a charging resource release response message to the CTF entity.

The charging resource release response message is used to respond to the charging resource release request, and the charging resource release response message indicates that the first R-CHF entity has released the related information of the charging resource created by the first R-CHF entity.

S710: The CTF entity and the primary CHF entity perform subsequent charging interaction.

The subsequent charging interaction may be updating the charging resource or releasing the charging resource. For a specific implementation process, refer to related descriptions in S704 to S706. Details are not described herein again.

It should be noted herein that, S707 to S709 may be performed before or after S704. S707 to S709 may be performed after S704 for the following purpose: After an identifier of the charging resource of the primary CHF entity and the address of the primary CHF entity are fed back to the CTF entity based on the first R-CHF entity, it is checked and determined whether the CTF entity and the primary CHF entity can normally perform charging. If charging cannot be normally performed, the first R-CHF entity may continue to be used as a charging relay because the first R-CHF entity is not removed, so that normal charging is ensured.

It can be learned that, in this embodiment, in a scenario in which a charging resource has been established between the CTF entity and the R-CHF entity and a charging resource has been established between the R-CHF entity and the primary CHF entity, when the primary CHF entity can perform charging, the CTF entity dynamically removes the R-CHF entity, so that implementation of an operator network is simplified, and service use by the user and charging by the operator for the user are not affected, to improve user experience.

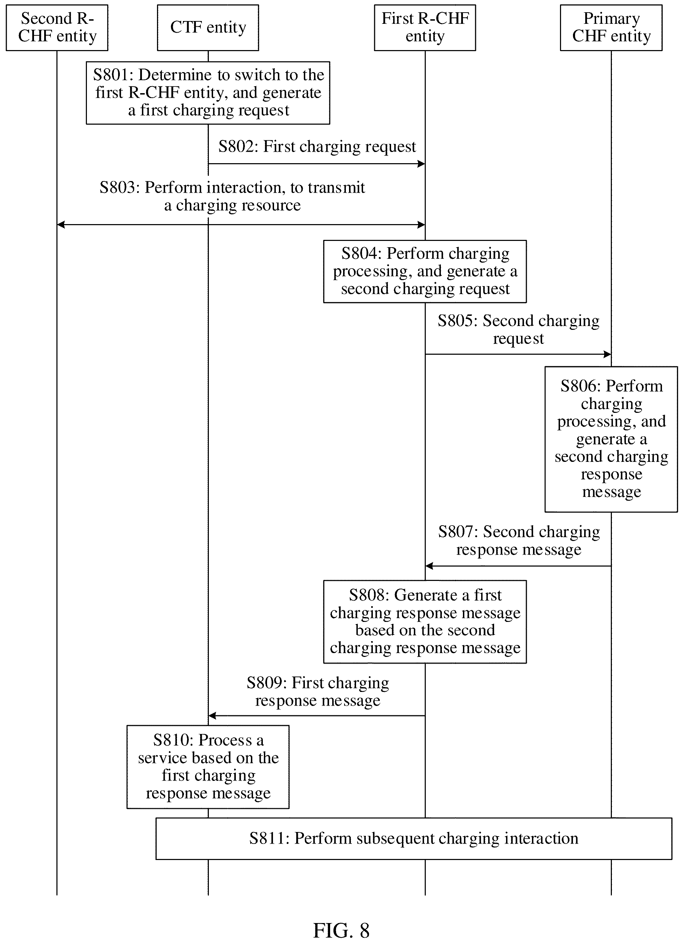

FIG. 8 is a schematic flowchart of another charging method according to an embodiment of this application. FIG. 8 shows a scenario in which a converged charging resource has been established between a CTF entity and a second R-CHF entity and between the second R-CHF entity and a primary CHF entity. As shown in FIG. 8, the method includes the following steps.

S801: The CTF entity determines to switch to a first R-CHF entity, and generates a first charging request.

When a location of a user equipment changes, or a service changes, or a CTF entity that serves the user equipment changes, the second R-CHF entity may not continue to provide a charging service, and the first R-CHF entity needs to be introduced to replace the second R-CHF entity to operate. The CTF entity determines to switch to the first R-CHF entity.

The first charging request is a first charging resource update request or a first charging resource release request. The first charging request includes switching information for switching from the second R-CHF entity to the first R-CHF entity. In an example, the switching information includes switching indication information and an address or an identifier of the second R-CHF entity.

It should be noted herein that, in this embodiment, if the CTF entity performs switching, all operations related to the CTF entity in this embodiment are performed by a switched CTF entity.

S802: The CTF entity sends the first charging request to the first R-CHF entity.

Specifically, the CTF entity sends the first charging request to the first R-CHF entity based on an address of the first R-CHF entity.

It should be noted herein that, for a manner in which the CTF entity determines the address of the first R-CHF entity, refer to related descriptions in S503. Details are not described herein again.

S803: The first R-CHF entity interacts with the second R-CHF entity, to transmit a charging resource.

Specifically, the first R-CHF entity interacts with the second R-CHF entity based on the address or the identifier of the second R-CHF entity, to obtain related information of the first charging resource cached in the second R-CHF entity. The first R-CHF entity obtains the related information of the first charging resource from the second R-CHF entity based on the switching information in the first charging request.

It should be understood that, after the first R-CHF entity obtains the related information of the first charging resource, the second R-CHF entity deletes a locally stored charging resource and related information of the charging resource between the second R-CHF entity and the primary CHF entity.

When the switching information does not include the address or the identifier of the second R-CHF entity, the first R-CHF entity determines the address or the identifier of the second R-CHF entity from an NRF entity based on an identifier of the CTF entity, location information of the user equipment, or location information of the user equipment and a user identifier.

S804: The first R-CHF entity performs charging processing, and generates a second charging request.

S805: The first R-CHF entity sends the second charging request to the primary CHF entity.

S806: The primary CHF entity performs charging processing, and generates a second charging response message.

S807: The primary CHF entity sends the second charging response message to the first R-CHF entity.

S808: The first R-CHF entity generates a first charging response message based on the second charging response message.

S809: The first R-CHF entity sends the first charging response message to the CTF entity.

S810: The CTF entity processes a service based on the first charging response message.

S811: The CTF entity, the first R-CHF entity, and the primary CHF entity perform subsequent charging interaction.

It should be noted herein that, for a specific process of S804 to S811, refer to related descriptions in S504 to S511. Details are not described herein again.

It can be learned that, in this embodiment, in a scenario in which a charging resource has been established between the CTF entity and the second R-CHF entity and a charging resource has been established between the second R-CHF entity and the primary CHF entity, if the second R-CHF entity cannot provide a relay service between the CTF entity and the primary CHF entity, normal charging is ensured by switching the second R-CHF entity serving as a relay to the first R-CHF entity, so that implementation of an operator network is simplified, and service use by the user and charging by an operator for the user are not affected, to improve user experience.

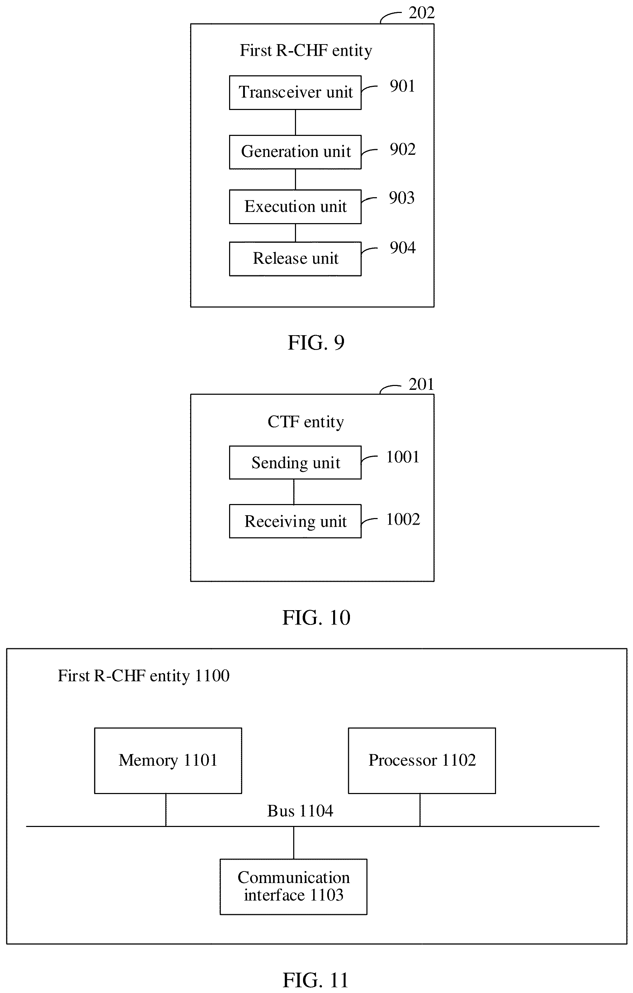

FIG. 9 is a diagram of a structure of a first R-CHF entity according to an embodiment of this application. The first R-CHF entity is the R-CHF entity 202 in FIG. 1. As shown in FIG. 9, the first R-CHF entity 202 includes:
a transceiver unit 901, configured to receive a first charging request from a charging trigger function CTF entity, where the first charging request is used to request to create, update, or release a first charging resource;
the transceiver unit 901, further configured to send a second charging request to a primary CHF entity, where the second charging request is used to request to create, update, or release a second charging resource; and receive a second charging response message that is sent by the primary CHF entity in response to the second charging request, where the second charging response message includes third capability information, and the third capability information is capability information that is determined by the primary CHF entity based on the second charging request and that is used for interaction between the primary CHF entity and the first R-CHF entity;
a generation unit 902, further configured to generate, based on the second charging response message, a first charging response message in response to the first charging request; and
the transceiver unit 901, further configured to send the first charging response message to the CTF entity, where the first charging response message includes fourth capability information, and the fourth capability information is capability information that is determined by the first R-CHF based on the third capability information and that is used for interaction between the first R-CHF entity and the CTF entity.

With reference to the third aspect, in a possible implementation, the first charging request further includes first capability information, and the first capability information is capability information that is provided by the CTF entity and that can be used for interaction between the first R-CHF entity and the CTF entity; the second charging request includes second capability information, the second capability information represents a capability used for interaction between the primary CHF entity and the first R-CHF entity, and the second capability information is determined by the first R-CHF entity based on the first capability information; and the third capability information is determined by the primary CHF entity based on the second capability information.

With reference to the third aspect, in a possible implementation, the first capability information includes at least one of a first payload size that is of a charging message for the first charging resource and that is supported by the CTF entity, first idle duration during collection of charging information performed by the CTF entity for the first charging resource, or a first charging feature;
the fourth capability information includes at least one of a fourth payload size of a charging message for the first charging resource, fourth idle duration during collection of charging information performed by the CTF entity for the first charging resource, a fourth charging feature, or a first charging resource trigger condition setting;
the second capability information includes at least one of a second payload size that is of a charging message for the second charging resource and that is supported by the first R-CHF entity, second idle duration during collection of charging information performed by the first R-CHF entity for the second charging resource, or a second charging feature; and
the third capability information includes at least one of a third payload size for a charging message for the second charging resource, third idle duration during collection of charging information performed by the first R-CHF entity for the second charging resource, a third charging feature, or a second charging resource trigger condition setting.

With reference to the third aspect, in a possible implementation, that the second capability information is determined by the first R-CHF entity based on the first capability information includes:
When the first capability information includes the first payload size, the second capability information also includes the second payload size, and the second payload size is a smaller one of the first payload size and a payload size that is of a charging message for the first charging resource and that is supported by the first R-CHF entity; when the first capability information includes the first idle duration, the second capability information also includes the second idle duration, and the second idle duration is a smaller one of the first idle duration and idle duration during collection of charging information performed by the first R-CHF entity for the second charging resource; and when the first capability information includes the first charging feature, the second capability information also includes the second charging feature, and the second charging feature is an intersection of the first charging feature and a charging feature supported by the first R-CHF entity.

Capability negotiation between the CTF entity and the first R-CHF entity can be implemented in the foregoing manner.

With reference to the third aspect, in a possible implementation,
when the third capability information includes the first payload size, the fourth capability information also includes the fourth payload size; and if the second capability information includes the second payload size, the fourth payload size is the third payload size; or if the second capability information does not include the second payload size, the fourth payload size is a smaller one of the third payload size and a payload size that is of a charging message for the first charging resource and that is supported by the first R-CHF entity;
when the third capability information includes the third idle duration, the fourth capability information also includes the fourth idle duration; and if the second capability information includes the third idle duration, the fourth idle duration is the third idle duration; or if the second capability information does not include the second idle duration, the fourth idle duration is a smaller one of the third idle duration and idle duration during collection of charging information performed by the first R-CHF entity for the second charging resource; and
when the third capability information includes the third charging feature, the fourth capability information also includes the fourth charging feature; and if the second capability information includes the second charging feature, the fourth charging feature is the third charging feature; or if the second capability information does not include the second charging feature, the fourth charging feature is an intersection of the third charging feature and a charging feature supported by the first R-CHF entity.

With reference to the third aspect, in a possible implementation, when the third capability information includes the second charging resource trigger condition setting, the fourth capability information also includes the first charging resource trigger condition setting, status information in the first charging resource trigger condition setting is a union of status information in the second charging resource trigger condition setting and status information of a trigger condition determined by the first R-CHF entity; and
a threshold of a trigger condition in the first charging resource trigger condition setting is a smaller one of a threshold of a trigger condition in the second charging resource trigger condition setting and a threshold of the trigger condition determined by the first R-CHF entity.

With reference to the third aspect, in a possible implementation, the first R-CHF entity 202 further includes:
an execution unit 903, configured to perform charging processing based on a first charging request.

With reference to the third aspect, in a possible implementation, the first charging request is used to request to create the first charging resource, the first R-CHF entity 202 further includes the execution unit 903, and the execution unit 903 is configured to:
when the first charging request is used to request to perform session-based converged charging, generate the first charging resource corresponding to the first charging request; and open a first R-CHF charging data record in the first charging resource, and write charging information in the first charging request into the first R-CHF charging data record; and when the first charging request is used to request to perform one-time event charging, generate the first charging resource corresponding to the first charging request, and generate the first R-CHF charging data record based on the first charging resource and the charging information in the first charging request, where the first R-CHF charging data record includes the charging information in the first charging request.

With reference to the third aspect, in a possible implementation, the first charging request carries an identifier of the second charging resource generated by the primary CHF entity, the first R-CHF entity 202 further includes the execution unit 903, and the execution unit 903 is configured to:
generate the second charging request based on the identifier of the second charging resource, where the second charging request is used to request to update or release the second charging resource.

With reference to the third aspect, in a possible implementation, the second charging request further carries a notification receiving address for the first R-CHF, and the notification receiving address is used to update a notification address corresponding to the second charging resource on the primary CHF entity.

The notification address is used by the primary CHF entity to subsequently send a notification message to the first R-CHF entity.

With reference to the third aspect, in a possible implementation, the second charging request is used to request to update or release the second charging resource, the second charging request carries adjustment indication information, and the indication information indicates that the first R-CHF entity has adjusted the trigger condition setting delivered by the primary CHF entity.

With reference to the third aspect, in a possible implementation, the first charging request is used to update or release the first charging resource, the first R-CHF entity 202 further includes the execution unit 903, and the execution unit 903 is configured to:
determine a second R-CHF entity, where the second R-CHF entity is a CHF entity that provides a relay capability for the CTF entity and the primary CHF entity before the first R-CHF entity serves as a relay CHF entity; and obtain related information of the first charging resource from the second R-CHF entity, where the first charging information is a charging resource generated by the second R-CHF entity.

With reference to the third aspect, in a possible implementation, the first charging request carries information for switching from the second R-CHF entity to the first R-CHF entity, and in an aspect of obtaining the related information of the first charging resource from the second R-CHF entity, the execution unit 903 is specifically configured to:
obtain the information of the first charging resource from the second R-CHF entity based on the switching information; and
the generation unit 902 is further configured to generate the second charging request based on the obtained information of the first charging resource.

With reference to the third aspect, in a possible implementation, the transceiver unit 901 is further configured to:
receive an R-CHF removal request sent by the CTF entity, where the R-CHF removal request includes a removal indication, and the removal indication is used for the first R-CHF to return related information of the second charging resource generated by the primary CHF entity; and send a removal response message to the CTF entity, where the removal response message includes the related information of the second charging resource generated by the primary CHF entity.

With reference to the third aspect, in a possible implementation, the first R-CHF entity 202 further includes:
a release unit 904, configured to release the first charging resource based on the R-CHF removal request, where the removal response message further includes a release result of the first charging resource.

It should be noted that, for a specific function implementation of the first R-CHF entity 202, refer to the descriptions of the foregoing charging method. For example, the transceiver unit 901 is configured to perform related content in S301 to S304, and the generation unit 902, the execution unit 903, and the release unit 904 are configured to perform related content in S302 and S304. The units or modules in the first R-CHF entity 202 may be separately or together combined into one or more other units or modules, or one or more units or modules thereof may be further split into a plurality of functionally smaller units or modules. This can implement same operations without affecting implementation of technical effect of embodiments of the present invention. The foregoing units or modules are divided based on logical functions. During actual application, functions of one unit (or module) are implemented by a plurality of units (or modules), or functions of a plurality of units (or modules) are implemented by one unit (or module).

FIG. 10 is a diagram of a structure of a CTF entity according to an embodiment of this application. The CTF entity is the CTF entity 201 in FIG. 2. The CTF entity 201 includes a sending unit 1001 and a receiving unit 1002.

The sending unit 1001 is configured to send a charging request to a first R-CHF entity, where when a charging request is an R-CHF removal request on a premise that a charging resource has been established between the first R-CHF entity and a primary CHF entity, the R-CHF removal request includes a removal indication, the removal indication indicates the first R-CHF to return related information of a second charging resource generated by the primary CHF entity, and the primary CHF entity provides online quota management and charging data record generation;
the receiving unit 1002 is configured to receive a removal response message sent by the first R-CHF entity, where the removal response message includes the related information of the second charging resource generated by the primary CHF entity, and related information of a first charging resource includes an identifier of the second charging resource; and
the sending unit 1001 is further configured to send a third charging request to the primary CHF based on the identifier of the second charging resource, where the third charging request is an operation request of the second charging resource.

In a possible implementation, before or after the sending unit sends the third charging request,
the sending unit 1001 is further configured to send a charging resource release request to the first R-CHF entity, where the charging resource release request is used to request to release related information of the charging resource created by the first R-CHF entity; and
the receiving unit 1002 is further configured to receive a charging resource release response message sent by the first R-CHF entity, where the charging resource release response message indicates that the first R-CHF entity has released the related information of the charging resource created by the first R-CHF entity.

With reference to the fourth aspect, in a possible implementation, when the charging request is an R-CHF insertion request on a premise that a charging resource has been established between the CTF entity and the primary CHF entity, the R-CHF insertion request includes the related information of the second charging resource generated by the primary CHF entity; and
the receiving unit 1002 is configured to receive a charging response message sent by the first R-CHF entity, where the charging response message includes a result of sending the third charging request by the first R-CHF to the primary CHF based on the related information of the second charging resource.

It should be noted that, for a specific function implementation of the CTF entity 201, refer to the descriptions of the foregoing charging method. For example, the sending unit 1001 and the receiving unit 1002 are configured to perform related content in S401 and S402. The units or modules in the CTF entity 201 may be separately or together combined into one or more other units or modules, or one or more units or modules thereof may be further split into a plurality of functionally smaller units or modules. This can implement same operations without affecting implementation of technical effect of embodiments of the present invention. The foregoing units or modules are divided based on logical functions. During actual application, functions of one unit (or module) are implemented by a plurality of units (or modules), or functions of a plurality of units (or modules) are implemented by one unit (or module). Certainly, the CTF entity 201 further includes a functional unit configured to process data, which is not shown in the figure.

Based on the descriptions of the foregoing method embodiments and related device embodiments, referring to FIG. 11, an embodiment of the present invention further provides a diagram of a structure of a first R-CHF entity 1100. The first R-CHF entity 1100 (the first R-CHF entity 1100 is specifically a computer device) shown in FIG. 11 includes a memory 1101, a processor 1102, a communication interface 1103, and a bus 1104. A communication connection is implemented between the memory 1101, the processor 1102, and the communication interface 1103 via the bus 1104.

Optionally, the memory 1101 is a read-only memory (Read-Only Memory, ROM), a static storage device, a dynamic storage device, or a random access memory (Random Access Memory, RAM).

The memory 1101 can store a program. When the program stored in the memory 1101 is executed by the processor 1102, the processor 1102 and the communication interface 1103 are configured to perform the steps of the charging method in the embodiment shown in FIG. 3.

The processor 1102 is a general-purpose central processing unit (Central Processing Unit, CPU), a microprocessor, an application-specific integrated circuit (Application-Specific Integrated Circuit, ASIC), a graphics processing unit (graphics processing unit, GPU), or one or more integrated circuits, and is configured to perform a related program, to implement a function that needs to be performed by a unit in a first R-CHF entity 202 in embodiments of this application, or perform the charging method in method embodiments of this application.

The processor 1102 may alternatively be an integrated circuit chip and has a signal processing capability. In an implementation process, steps of the charging method in this application can be completed through an integrated logic circuit of hardware in the processor 1102 or instructions in a form of software. Optionally, the processor 1102 is a general-purpose processor, a digital signal processor (Digital Signal Processor, DSP), an ASIC, a field programmable gate array (Field Programmable Gate Array, FPGA) or another programmable logic device, a discrete gate or a transistor logic device, or a discrete hardware component. The processor 1102 can implement or perform the methods, the steps, and logical block diagrams that are disclosed in embodiments of this application. The general-purpose processor is a microprocessor, or the processor is any conventional processor. The steps in the methods disclosed with reference to embodiments of this application can be directly performed and completed by a hardware decoding processor, or can be performed and completed by using a combination of hardware in the decoding processor and a software module. Optionally, the software module is located in a random access memory, a flash memory, a read-only memory, a programmable read-only memory, an electrically erasable programmable memory, a register, or another mature storage medium in the art. The storage medium is located in the memory 1101. The processor 1102 reads information in the memory 1101, and completes, in combination with hardware of the processor 1102, functions that need to be performed by units included in the first R-CHF entity 202 in embodiments of this application, or performs the charging method in the embodiment shown in FIG. 3.

The communication interface 1103 uses a transceiver apparatus, for example, but not limited to, a transceiver, to implement communication between the first R-CHF entity 1100 and another device (for example, the CTF entity 201 and the primary CHF entity 203 shown in FIG. 2) or a communication network. For example, the first R-CHF entity 1100 can receive a charging response message of the primary CHF entity 203 via the communication interface 1103.

The bus 1104 may include a channel for transferring information between various components (for example, the memory 1101, the processor 1102, and the communication interface 1103) of the first R-CHF entity 1100.

It should be noted that, although only the memory, the processor, and the communication interface are shown in the first R-CHF entity 1100 shown in FIG. 11, in a specific implementation process, a person skilled in the art should understand that the first R-CHF entity 1100 further includes other components necessary for implementing a normal operation. In addition, based on a specific requirement, a person skilled in the art should understand that the first R-CHF entity 1100 may further include hardware components for implementing other additional functions. In addition, a person skilled in the art should understand that the first R-CHF entity 1100 may also include only components necessary for implementing embodiments of this application, but not necessarily include all the components shown in FIG. 11.

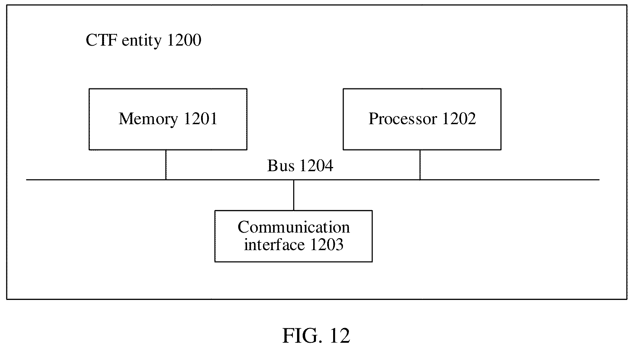

Based on the descriptions of the foregoing method embodiments and related device embodiments, referring to FIG. 12, an embodiment of the present invention further provides a diagram of a structure of a CTF entity 1200. The CTF entity 1200 (the CTF entity 1200 is specifically a computer device) shown in FIG. 12 includes a memory 1201, a processor 1202, a communication interface 1203, and a bus 1204. A communication connection is implemented between the memory 1201, the processor 1202, and the communication interface 1203 via the bus 1204.

Optionally, the memory 1201 is a read-only memory (Read-Only Memory, ROM), a static storage device, a dynamic storage device, or a random access memory (Random Access Memory, RAM).

The memory 1201 can store a program. When the program stored in the memory 1201 is executed by the processor 1202, the processor 1202 and the communication interface 1203 are configured to perform the steps of the charging method in the embodiment shown in FIG. 4.

The processor 1202 is a general-purpose central processing unit (Central Processing Unit, CPU), a microprocessor, an application-specific integrated circuit (Application-Specific Integrated Circuit, ASIC), a graphics processing unit (graphics processing unit, GPU), or one or more integrated circuits, and is configured to perform a related program, to implement a function that needs to be performed by a unit in a CTF entity 201 in embodiments of this application, or perform the charging method in method embodiments of this application.

The processor 1202 may alternatively be an integrated circuit chip and has a signal processing capability. In an implementation process, steps of the charging method in this application can be completed through an integrated logic circuit of hardware in the processor 1202 or instructions in a form of software. Optionally, the processor 1202 is a general-purpose processor, a digital signal processor (Digital Signal Processor, DSP), an ASIC, a field programmable gate array (Field Programmable Gate Array, FPGA) or another programmable logic device, a discrete gate or a transistor logic device, or a discrete hardware component. The processor 1202 can implement or perform the methods, the steps, and logical block diagrams that are disclosed in embodiments of this application. The general-purpose processor is a microprocessor, or the processor is any conventional processor. The steps in the methods disclosed with reference to embodiments of this application can be directly performed and completed by a hardware decoding processor, or can be performed and completed by using a combination of hardware in the decoding processor and a software module. Optionally, the software module is located in a random access memory, a flash memory, a read-only memory, a programmable read-only memory, an electrically erasable programmable memory, a register, or another mature storage medium in the art. The storage medium is located in the memory 1201. The processor 1202 reads information in the memory 1201, and completes, in combination with hardware of the processor 1202, functions that need to be performed by units included in the CTF entity 201 in embodiments of this application, or performs the charging method in the embodiment shown in FIG. 4.

The communication interface 1203 uses a transceiver apparatus, for example, but not limited to, a transceiver, to implement communication between the CTF entity 1200 and another device (for example, the first R-CHF entity 202 shown in FIG. 2) or a communication network. For example, the CTF entity 1200 can obtain a charging response message from the first R-CHF entity via the communication interface 1203.

The bus 1204 may include a channel for transferring information between various components (for example, the memory 1201, the processor 1202, and the communication interface 1203) of the CTF entity 1200.

It should be noted that, although only the memory, the processor, and the communication interface are shown in the CTF entity 1200 shown in FIG. 12, in a specific implementation process, a person skilled in the art should understand that the CTF entity 1200 further includes other components necessary for implementing a normal operation. In addition, based on a specific requirement, a person skilled in the art should understand that the CTF entity 1200 may further include hardware components for implementing other additional functions. In addition, a person skilled in the art should understand that the CTF entity 1200 may also include only components necessary for implementing embodiments of this application, but not necessarily include all the components shown in FIG. 8.

An embodiment of this application further provides a chip. The chip includes a processor and a data interface. The processor reads, via the data interface, instructions stored in a memory, to implement the charging method in embodiments of this application.

Optionally, in an implementation, the chip may further include the memory, the memory stores the instructions, and the processor is configured to perform the instructions stored in the memory. When the instructions are executed, the processor is configured to perform the charging method.

An embodiment of this application further provides a computer-readable storage medium. The computer-readable storage medium stores instructions. When the instructions are run on a computer or a processor, the computer or the processor is enabled to perform one or more steps in any one of the foregoing methods.

An embodiment of this application further provides a computer program product including instructions. When the computer program product is run on a computer or a processor, the computer or the processor is enabled to perform one or more steps in any one of the foregoing methods.

A person skilled in the art can appreciate that functions described with reference to various illustrative logical blocks, modules, and algorithm steps disclosed and described in this specification may be implemented by hardware, software, firmware, or any combination thereof. If implemented by software, the functions described with reference to the illustrative logical blocks, modules, and steps may be stored in or transmitted over a computer-readable medium as one or more instructions or code and executed by a hardware-based processing unit. The computer-readable medium may include a computer-readable storage medium, which corresponds to a tangible medium like a data storage medium, or may include any communication medium that facilitates transmission of a computer program from one place to another place (for example, according to a communication protocol). In this manner, the computer-readable medium may generally correspond to: (1) a non-transitory tangible computer-readable storage medium, or (2) a communication medium such as a signal or a carrier. The data storage medium may be any usable medium that can be accessed by one or more computers or one or more processors to retrieve instructions, code, and/or data structures for implementing the technologies described in this application. A computer program product may include a computer-readable medium.

By way of example but not limitation, such computer-readable storage media include a RAM, a ROM, an EEPROM, a CD-ROM or another optical disc storage apparatus, a magnetic disk storage apparatus or another magnetic storage apparatus, a flash memory, or any other medium that can store required program code in a form of instructions or data structures and that can be accessed by a computer. In addition, any connection is properly referred to as a computer-readable medium. For example, if instructions are transmitted from a website, a server, or another remote source through a coaxial cable, an optical fiber, a twisted pair, a digital subscriber line (digital subscriber line, DSL), or a wireless technology such as infrared, radio, or microwave, the coaxial cable, the optical fiber, the twisted pair, the DSL, or the wireless technology such as infrared, radio, or microwave is included in a definition of the medium. However, it should be understood that, the computer-readable storage medium and the data storage medium do not include connections, carriers, signals, or other transitory media, but actually mean non-transitory tangible storage media. Disks and discs used in this specification include a compact disc (Compact Disc, CD), a laser disc, an optical disc, a digital versatile disc (digital versatile disc, DVD), and a Blu-ray disc. The disks usually reproduce data magnetically, whereas the discs reproduce data optically by using lasers. Combinations of the above should also be included within the scope of the computer-readable medium.

The instructions may be executed by one or more processors, such as one or more DSPs, general-purpose microprocessors, ASICs, FPGAs, or other equivalent integrated or discrete logic circuits. Therefore, the term "processor" used in this specification may refer to the foregoing structure, or any other structure that may be applied to implementation of the technologies described in this specification. In addition, in some aspects, the functions described with reference to the illustrative logical blocks, modules, and steps described in this specification may be provided within dedicated hardware and/or software modules configured for encoding and decoding, or may be incorporated into a combined codec. In addition, the technologies may be completely implemented in one or more circuits or logic elements.

In the several embodiments provided in this application, it should be understood that, the disclosed system, apparatus, and method may be implemented in other manners. For example, division into the units is merely logical function division and may be another division during actual implementation. For example, a plurality of units or assemblies may be combined or integrated into another system, or some features may be ignored or not performed. Optionally, the displayed or discussed mutual couplings or direct couplings or communication connections are implemented via some interfaces. The indirect couplings or communication connections between the apparatuses or units are implemented in electronic, mechanical, or other forms.

Optionally, the units described as separate components may or may not be physically separate, and parts displayed as units may be or may not be physical units, may be located at one position, or may be distributed on a plurality of network units. Some or all of the units may be selected based on actual requirements to achieve the objectives of the solutions of embodiments.

All or some of the foregoing embodiments may be implemented using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, the procedures or functions according to embodiments of this application are all or partially generated.

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

## Claims

1. A charging method, applied to a first relay charging function R-CHF entity, wherein the method comprises:
receiving a first charging request from a charging trigger function CTF entity, wherein the first charging request is used to request to create, update, or release a first charging resource;
sending a second charging request to a primary CHF entity based on the first charging request, wherein the second charging request is used to request to create, update, or release a second charging resource, and the primary CHF entity provides online quota management and charging data record generation;
receiving a second charging response message that is sent by the primary CHF entity in response to the second charging request, wherein the second charging response message comprises third capability information, and the third capability information is capability information that is determined by the primary CHF entity based on the second charging request and that is used for interaction between the primary CHF entity and the first R-CHF entity; and
generating, based on the second charging response message, a first charging response message in response to the first charging request, and sending the first charging response message to the CTF entity, wherein the first charging response message comprises fourth capability information, and the fourth capability information is capability information that is determined by the first R-CHF based on the third capability information and that is used for interaction between the first R-CHF entity and the CTF entity.

2. The method according to claim 1, wherein
the first charging request further comprises first capability information, and the first capability information is capability information that is provided by the CTF entity and that can be used for interaction between the first R-CHF entity and the CTF entity; and
the second charging request comprises second capability information, the second capability information represents a capability used for interaction between the primary CHF entity and the first R-CHF entity, and the second capability information is determined by the first R-CHF entity based on the first capability information.

3. The method according to claim 2, wherein the first capability information comprises at least one of a first payload size that is of a charging message for the first charging resource and that is supported by the CTF entity, first idle duration during collection of charging information performed by the CTF entity for the first charging resource, or a first charging feature;
the fourth capability information comprises at least one of a fourth payload size of a charging message for the first charging resource, fourth idle duration during collection of charging information performed by the CTF entity for the first charging resource, a fourth charging feature, or a first charging resource trigger condition setting;
the second capability information comprises at least one of a payload size that is of a charging message for the second charging resource and that is supported by the first R-CHF entity, second idle duration during collection of charging information performed by the first R-CHF entity for the second charging resource, or a second charging feature; and
the third capability information comprises at least one of a third payload size for a charging message for the second charging resource, third idle duration during collection of charging information performed by the first R-CHF entity for the second charging resource, a third charging feature, or a second charging resource trigger condition setting.

4. The method according to claim 3, wherein that the second capability information is determined by the first R-CHF entity based on the first capability information comprises:
when the first capability information comprises the first payload size, the second capability information also comprises the second payload size, and the second payload size is a smaller one of the first payload size and a payload size that is of a charging message for the first charging resource and that is supported by the first R-CHF entity;
when the first capability information comprises the first idle duration, the second capability information also comprises the second idle duration, and the second idle duration is a smaller one of the first idle duration and idle duration during collection of charging information performed by the first R-CHF entity for the second charging resource; and
when the first capability information comprises the first charging feature, the second capability information also comprises the second charging feature, and the second charging feature is an intersection of the first charging feature and a charging feature supported by the first R-CHF entity.

5. The method according to claim 3, wherein
when the third capability information comprises the third payload size, the fourth capability information also comprises the fourth payload size; and if the second capability information comprises the second payload size, the fourth payload size is the third payload size; or if the second capability information does not comprise the second payload size, the fourth payload size is a smaller one of the third payload size and a payload size that is of a charging message for the first charging resource and that is supported by the first R-CHF entity;
when the third capability information comprises the third idle duration, the fourth capability information also comprises the fourth idle duration; and if the second capability information comprises the second idle duration, the fourth idle duration is the third idle duration of the third capability information; or if the second capability information does not comprise the second idle duration, the fourth idle duration is a smaller one of the third idle duration and idle duration during collection of charging information performed by the first R-CHF entity for the second charging resource;
when the third capability information comprises the third charging feature, the fourth capability information also comprises the fourth charging feature; and if the second capability information comprises the second charging feature, the fourth charging feature is the third charging feature; or if the second capability information does not comprise the second charging feature, the fourth charging feature is an intersection of the third charging feature and a charging feature supported by the first R-CHF entity; and
when the third capability information comprises the second charging resource trigger condition setting, the fourth capability information also comprises the first charging resource trigger condition setting, status information in the first charging resource trigger condition setting is a union of status information in the second charging resource trigger condition setting and status information of a trigger condition determined by the first R-CHF entity, and a threshold of a trigger condition in the first charging resource trigger condition setting is a smaller one of a threshold of a trigger condition in the second charging resource trigger condition setting and a threshold of the trigger condition determined by the first R-CHF entity.

6. The method according to any one of claims 1 to 5, wherein the first charging request is used to request to create the first charging resource, and the method further comprises:
when the first charging request is used to request to perform session-based converged charging, generating the first charging resource corresponding to the first charging request, opening a first R-CHF charging data record in the first charging resource, and writing charging information in the first charging request into the first R-CHF charging data record; and
when the first charging request is used to request to perform one-time event charging, generating the first charging resource corresponding to the first charging request, and generating the first R-CHF charging data record based on the first charging resource and the charging information in the first charging request, wherein the first R-CHF charging data record comprises the charging information in the first charging request.

7. The method according to any one of claims 1 to 5, wherein the first charging request carries an identifier of the second charging resource generated by the primary CHF entity, and the method further comprises:
generating the second charging request based on the identifier of the second charging resource, wherein the second charging request is used to request to update or release the second charging resource.

8. The method according to claim 7, wherein the second charging request further carries a notification receiving address for the first R-CHF, and the notification receiving address is used to update a notification address corresponding to the second charging resource on the primary CHF entity.

9. The method according to any one of claims 1 to 5, wherein
the second charging request is used to request to update or release the second charging resource, the second charging request carries adjustment indication information, and the indication information indicates that the first R-CHF entity has adjusted the trigger condition setting delivered by the primary CHF entity.

10. The method according to any one of claims 1 to 5, wherein the first charging request is used to update or release the first charging resource, and the method further comprises:
determining a second R-CHF entity, wherein the second R-CHF entity is a CHF entity that provides a relay capability for the CTF entity and the primary CHF entity before the first R-CHF entity serves as a relay CHF entity; and
obtaining related information of the first charging resource from the second R-CHF entity, wherein the first charging resource is a charging resource generated by the second R-CHF entity.

11. The method according to claim 10, wherein the first charging request carries switching information for switching from the second R-CHF entity to the first R-CHF entity, and obtaining the related information of the first charging resource from the second R-CHF entity comprises:
obtaining the related information of the first charging resource from the second R-CHF entity based on the switching information; and
the method further comprises:
generating the second charging request based on the obtained information of the first charging resource.

12. The method according to any one of claims 1 to 11, wherein the method further comprises:
receiving an R-CHF removal request sent by the CTF entity, wherein the R-CHF removal request comprises a removal indication, and the removal indication is used for the first R-CHF to return related information of the second charging resource generated by the primary CHF entity; and
sending a removal response message to the CTF entity, wherein the removal response message comprises the related information of the second charging resource generated by the primary CHF entity.

13. The method according to claim 12, wherein the method further comprises:
releasing the first charging resource based on the R-CHF removal request, wherein the removal response message further comprises a release result of the first charging resource.

14. A charging method, wherein the method is applied to a charging trigger function CTF entity, and comprises:
sending a charging request to a first relay charging function R-CHF entity, wherein
when the charging request is an R-CHF removal request on a premise that a charging resource has been established between the first relay charging function R-CHF entity and a primary CHF entity, the R-CHF removal request comprises a removal indication, the removal indication is used for the first R-CHF to return related information of a second charging resource generated by the primary CHF entity, and the primary CHF entity provides online quota management and charging data record generation; and
the method further comprises: receiving a removal response message sent by the first R-CHF entity, wherein the removal response message comprises the related information of the second charging resource generated by the primary CHF entity, and the related information comprises an identifier of the second charging resource; and
sending a third charging request to the primary CHF based on the identifier of the second charging resource, wherein the third charging request is an operation request of the second charging resource.

15. The method according to claim 14, wherein when the charging request is an R-CHF insertion request on a premise that a charging resource has been established between the CTF entity and the primary CHF entity, the R-CHF insertion request comprises the related information of the second charging resource generated by the primary CHF entity; and
the method further comprises: receiving a charging response message sent by the first R-CHF entity, wherein the charging response message comprises a result of sending the third charging request by the first R-CHF to the primary CHF based on the related information of the second charging resource.

16. The method according to claim 14, wherein before or after sending the third charging request, the method further comprises:
sending a charging resource release request to the first R-CHF entity, wherein the charging resource release request is used to request to release related information of the charging resource created by the first R-CHF entity; and
receiving a charging resource release response message sent by the first R-CHF entity, wherein the charging resource release response message indicates that the first R-CHF entity has released the related information of the charging resource created by the first R-CHF entity.

17. A first relay charging function R-CHF entity, comprising:
a transceiver unit, configured to receive a first charging request from a charging trigger function CTF entity, wherein the first charging request is used to request to create, update, or release a first charging resource, wherein
the transceiver unit is further configured to: send a second charging request to a primary CHF entity, wherein the second charging request is used to request to create, update, or release a second charging resource; and receive a second charging response message that is sent by the primary CHF entity in response to the second charging request, wherein the second charging response message comprises third capability information, and the third capability information is capability information that is determined by the primary CHF entity based on the second charging request and that is used for interaction between the primary CHF entity and the first R-CHF entity; and
a generation unit, further configured to generate, based on the second charging response message, a first charging response message in response to the first charging request, wherein the first charging response message comprises fourth capability information, and the fourth capability information is capability information that is determined by the first R-CHF based on the third capability information and that is used for interaction between the first R-CHF entity and the CTF entity, wherein
the transceiver unit is further configured to send the first charging response message to the CTF entity.

18. The R-CHF entity according to claim 17, wherein
the first charging request further comprises first capability information, and the first capability information is capability information that is provided by the CTF entity and that can be used for interaction between the first R-CHF entity and the CTF entity;
the second charging request comprises second capability information, the second capability information represents a capability used for interaction between the primary CHF entity and the first R-CHF entity, and the second capability information is determined by the first R-CHF entity based on the first capability information; and the third capability information is determined by the primary CHF entity based on the second capability information.

19. The R-CHF entity according to claim 18, wherein the first capability information comprises at least one of a payload size that is of a charging message for the first charging resource and that is supported by the CTF entity, first idle duration during collection of charging information performed by the CTF entity for the first charging resource, or a first charging feature;
the fourth capability information comprises at least one of a payload size of a charging message for the first charging resource, fourth idle duration during collection of charging information performed by the CTF entity for the first charging resource, a charging feature, or a first charging resource trigger condition setting;
the second capability information comprises at least one of a payload size that is of a charging message for the second charging resource and that is supported by the first R-CHF entity, second idle duration during collection of charging information performed by the first R-CHF entity for the second charging resource, or a charging feature; and
the third capability information comprises at least one of a payload size of a charging message for the second charging resource, third idle duration during collection of charging information performed by the first R-CHF entity for the second charging resource, a charging feature, or a second charging resource trigger condition setting.

20. The R-CHF entity according to claim 19, wherein that the second capability information is determined by the first R-CHF entity based on the first capability information comprises:
when the first capability information comprises the first payload size, the second capability information also comprises the second payload size, and the second payload size is a smaller one of the first payload size and a payload size that is of a charging message for the first charging resource and that is supported by the first R-CHF entity;
when the first capability information comprises the first idle duration, the second capability information also comprises the second idle duration, and the second idle duration is a smaller one of the first idle duration and idle duration during collection of charging information performed by the first R-CHF entity for the second charging resource; and
when the first capability information comprises the first charging feature, the second capability information also comprises the second charging feature, and the second charging feature is an intersection of the first charging feature and a charging feature supported by the first R-CHF entity.

21. The R-CHF entity according to claim 19, wherein
when the third capability information comprises the third payload size, the fourth capability information also comprises the fourth payload size; and if the second capability information comprises the second payload size, the fourth payload size is the third payload size; or if the second capability information does not comprise the second payload size, the fourth payload size is a smaller one of the third payload size and a payload size that is of a charging message for the first charging resource and that is supported by the first R-CHF entity;
when the third capability information comprises the third idle duration, the fourth capability information also comprises the fourth idle duration; and if the second capability information comprises the second idle duration, the fourth idle duration is the third idle duration of the third capability information; or if the second capability information does not comprise the second idle duration, the fourth idle duration is a smaller one of the third idle duration and idle duration during collection of charging information performed by the first R-CHF entity for the second charging resource;
when the third capability information comprises the third charging feature, the fourth capability information also comprises the fourth charging feature; and if the second capability information comprises the second charging feature, the fourth charging feature is the third charging feature; or if the second capability information does not comprise the second charging feature, the fourth charging feature is an intersection of the third charging feature and a charging feature supported by the first R-CHF entity;
when the third capability information comprises the second charging resource trigger condition setting, the fourth capability information also comprises the first charging resource trigger condition setting, status information in the first charging resource trigger condition setting is a union of status information in the second charging resource trigger condition setting and status information of a trigger condition determined by the first R-CHF entity; and
a threshold of a trigger condition in the first charging resource trigger condition setting is a smaller one of a threshold of a trigger condition in the second charging resource trigger condition setting and a threshold of the trigger condition determined by the first R-CHF entity.

22. The R-CHF entity according to any one of claims 17 to 21, wherein the first charging request is used to request to create the first charging resource, the first R-CHF entity comprises an execution unit, and the execution unit is configured to:
when the first charging request is used to request to perform session-based converged charging, generate the first charging resource corresponding to the first charging request, open a first R-CHF charging data record in the first charging resource, and write charging information in the first charging request into the first R-CHF charging data record; and
when the first charging request is used to request to perform one-time event charging, generate the first charging resource corresponding to the first charging request, and generate the first R-CHF charging data record based on the first charging resource and the charging information in the first charging request, wherein the first R-CHF charging data record comprises the charging information in the first charging request.

23. The R-CHF entity according to any one of claims 17 to 21, wherein the first charging request carries an identifier of the second charging resource generated by the primary CHF entity, the first R-CHF entity further comprises an execution unit, and the execution unit is configured to:
generate the second charging request based on the identifier of the second charging resource, wherein the second charging request is used to request to update or release the second charging resource.

24. The R-CHF entity according to claim 23, wherein the second charging request further carries a notification receiving address for the first R-CHF, and the notification receiving address is used to update a notification address corresponding to the second charging resource on the primary CHF entity.

25. The R-CHF entity according to any one of claims 17 to 21, wherein
the second charging request is used to request to update or release the second charging resource, the second charging request carries adjustment indication information, and the indication information indicates that the first R-CHF entity has adjusted the trigger condition setting delivered by the primary CHF entity.

26. The R-CHF entity according to any one of claims 17 to 21, wherein the first charging request is used to update or release the first charging resource, the first R-CHF entity further comprises an execution unit, and the execution unit is configured to:
determine a second R-CHF entity, wherein the second R-CHF entity is a CHF entity that provides a relay capability for the CTF entity and the primary CHF entity before the first R-CHF entity serves as a relay CHF entity; and
obtain related information of the first charging resource from the second R-CHF entity, wherein the first charging information is a charging resource generated by the second R-CHF entity.

27. The R-CHF entity according to claim 26, wherein the first charging request carries switching information for switching from the second R-CHF entity to the first R-CHF entity, and in an aspect of obtaining the related information of the first charging resource from the second R-CHF entity, the execution unit is specifically configured to:
obtain the information of the first charging resource from the second R-CHF based on the switching information; and
the generation unit is further configured to generate the second charging request based on the obtained information of the first charging resource.

28. The R-CHF entity according to any one of claims 17 to 27, wherein the transceiver unit is further configured to:
receive an R-CHF removal request sent by the CTF entity, wherein the R-CHF removal request comprises a removal indication, and the removal indication is used for the first R-CHF to return related information of the second charging resource generated by the primary CHF entity; and
send a removal response message to the CTF entity, wherein the removal response message comprises the related information of the second charging resource generated by the primary CHF entity.

29. The R-CHF entity according to claim 28, wherein the R-CHF entity further comprises:
a release unit, configured to release the first charging resource based on the R-CHF removal request, wherein the removal response message further comprises a release result of the first charging resource.

30. A charging trigger function CTF entity, comprising:
a sending unit, configured to send a charging request to a CTF entity, wherein
when the charging request is an R-CHF removal request on a premise that a charging resource has been established between a first relay charging function R-CHF entity and a primary CHF entity, the R-CHF removal request comprises a removal indication, the removal indication indicates the first R-CHF to return related information of a second charging resource generated by the primary CHF entity, and the primary CHF entity provides online quota management and charging data record generation; and
the CTF entity further comprises:
a receiving unit, configured to receive a removal response message sent by the first R-CHF entity, wherein the removal response message comprises the related information of the second charging resource generated by the primary CHF entity, and the related information comprises an identifier of the second charging resource; and
the sending unit is further configured to send a third charging request to the primary CHF based on the identifier of the second charging resource, wherein the third charging request is an operation request of the second charging resource.

31. The CTF entity according to claim 30, wherein
when the charging request is an R-CHF insertion request on a premise that a charging resource has been established between the CTF entity and the primary CHF entity, the R-CHF insertion request comprises the related information of the second charging resource generated by the primary CHF entity; and
the CTF entity further comprises:
the receiving unit, configured to receive a charging response message sent by the first R-CHF entity, wherein the charging response message comprises a result of sending the third charging request by the R-CHF to the primary CHF based on the related information of the second charging resource.

32. The CTF entity according to claim 30, wherein before or after sending the third charging request,
the sending unit is further configured to send a charging resource release request to the first R-CHF entity, wherein the charging resource release request is used to request to release related information of the charging resource created by the first R-CHF entity; and
the receiving unit is further configured to receive a charging resource release response message sent by the first R-CHF entity, wherein the charging resource release response message indicates that the first R-CHF entity has released the related information of the charging resource created by the first R-CHF entity.

33. A charging method, wherein the method is applied to a charging system, the charging system comprises a first relay charging function R-CHF entity, a charging trigger function CTF entity, and a primary CHF entity, and the method comprises:
sending, by the CTF entity, a first charging request to the first R-CHF entity, wherein the first charging request is used to request to create, update, or release a first charging resource;
sending, by the first R-CHF entity, a second charging request to the primary CHF entity, wherein the second charging request is used to request to create, update, or release a second charging resource, and the primary CHF entity provides online quota management and charging data record generation;
performing, by the primary CHF entity, charging processing based on the second charging request, and generating a second charging response message in response to the second charging request; and sending the second charging response message to the first R-CHF entity, wherein the second charging response message comprises third capability information, and the third capability information is capability information that is determined by the primary CHF based on the second charging request and that is used for interaction between the primary CHF entity and the first R-CHF entity;
generating, by the first R-CHF entity based on the second charging response message, a first charging response message in response to the first charging request, and sending the first charging response message to the CTF entity, wherein the first charging response message comprises fourth capability information, and the fourth capability information is capability information that is determined by the first R-CHF based on the third capability information and that is used for interaction between the first R-CHF entity and the CTF entity; and
performing, by the CTF entity, charging processing based on the first charging response message.

34. A charging system, wherein the charging system comprises a first relay charging function R-CHF entity, a charging trigger function CTF entity, and a primary CHF entity, wherein
the CTF entity is configured to send a first charging request to the first R-CHF entity, wherein the first charging request is used to request to create, update, or release a first charging resource;
the first R-CHF entity is configured to send the second charging request to the primary CHF entity, wherein the second charging request is used to request to create, update, or release a second charging resource, and the primary CHF entity provides online quota management and charging data record generation;
the primary CHF entity is configured to: perform charging processing based on the second charging request, and generate a second charging response message in response to the second charging request; and send the second charging response message to the first R-CHF entity, wherein the second charging response message comprises third capability information, and the third capability information is capability information that is determined by the primary CHF based on the second charging request and that is used for interaction between the primary CHF entity and the first R-CHF entity;
the first R-CHF entity is configured to: generate, based on the second charging response message, a first charging response message in response to the first charging request, and send the first charging response message to the CTF entity, wherein the first charging response message comprises fourth capability information, and the fourth capability information is capability information that is determined by the first R-CHF based on the third capability information and that is used for interaction between the first R-CHF entity and the CTF entity; and
the CTF entity is configured to perform charging processing based on the first charging response message.

35. A first R-CHF entity, comprising a processor and a memory, wherein the memory is configured to store program code, and the processor is configured to execute the program code, to implement the method according to any one of claims 1 to 13.

36. A CTF entity, comprising a processor and a memory, wherein the memory is configured to store program code, and the processor is configured to execute the program code, to implement the method according to any one of claims 14 to 16.

37. A computer-readable storage medium, wherein the computer-readable storage medium stores a computer program; and when the computer program is executed by a processor, the method according to any one of claims 1 to 16 is implemented.
